(19) Europäisches Patentamt
European Patent Office
Office européen des brevets

(11) EP 3 968 012 A1

(12) EUROPEAN PATENT APPLICATION

(43) Date of publication:
16.03.2022 Bulletin 2022/11

(51) International Patent Classification (IPC):
*G01N 21/958* (2006.01)

(21) Application number: 20195758.6

(52) Cooperative Patent Classification (CPC):
G01N 21/958

(22) Date of filing: 11.09.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: SCHOTT AG
55122 Mainz (DE)

(72) Inventors:
• Witzmann, Dr. André
95679 Waldershof (DE)
• Witkowski, Robert
92637 Weiden (DE)

(74) Representative: Ullrich & Naumann PartG mbB
Schneidmühlstrasse 21
69115 Heidelberg (DE)

(54) **APPARATUS FOR THE INSPECTION OF A CIRCULAR ELONGATED ELEMENT**

(57) The present invention refers to a specific apparatus (10) for the inspection of a circular elongated element (3), e.g. an endless glass tube produced by the Danner process. In addition, herein a specific method for the inspection of a circular elongated element (3) is described. According to the invention, the specific apparatus (10) und method are used to produce a specific bundle of separated circular elongated elements (3), for example glass tubes. These bundles (3b) can be used for the production of pharmaceutical packagings or technical glass.

Fig. 2

**Description**

The present invention refers to a specific apparatus for the inspection of a circular elongated element, e.g. an endless glass tube produced by the Danner process. In addition, herein a specific method for the inspection of a circular elongated element is described. According to the invention, the specific apparatus and method are used to produce a specific bundle of separated circular elongated elements, for example glass tubes. These bundles can in turn be used for the production of pharmaceutical packagings or technical glass.

For quality assurance, it is common to inspect circular elongated elements either during or after their production. If a defect is detected, the product or the intermediate product can be disregarded from further processing. An examples of an inspection apparatus is described in DE 10 2011 113 670 A1 and DE 10 2016 114 190 A1. Commonly, during the inspection, the circular elongated elements, which are inspected, rotate; however, they do not move relative to the camera(s).

Description

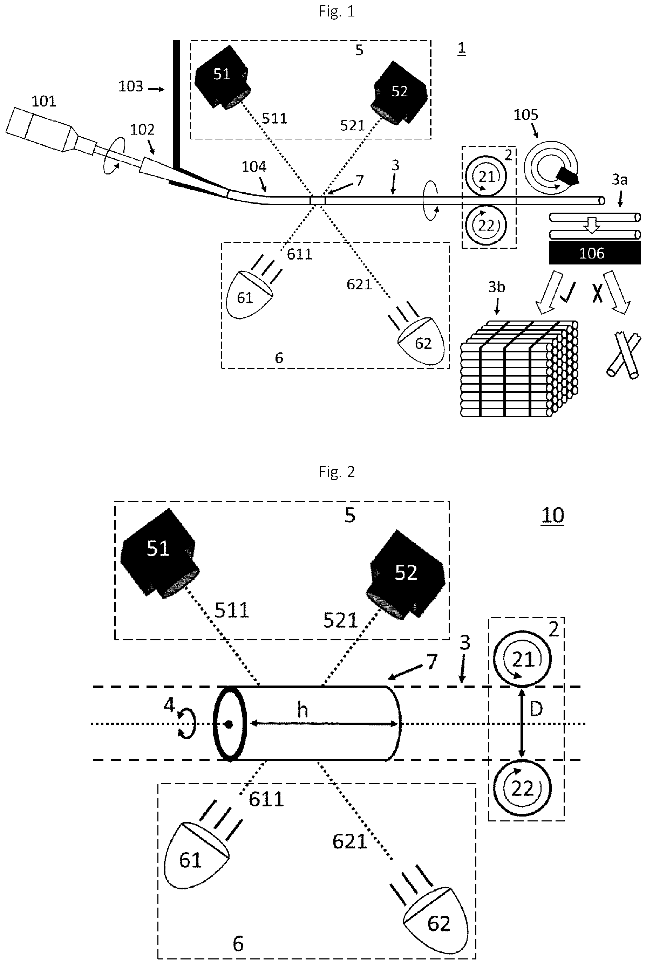

Widely used processes to obtain endless glass tubes are the Danner process and the Vello process (see Fig. 1). The processes have in common that molten glass is formed to an endless tube, which is then continuously drawn by a drawing unit. After passing the drawing unit, the endless glass tube is separated to length to obtain separated glass tubes of a specific length. The separated glass tubes are conveyed on belts and rolls and are finally packed in a bundle of separated glass tubes, e.g. the DENSOPACK® from SCHOTT AG. These bundles of separated glass tubes are used for example as intermediate products to produce pharmaceutical primary packagings, like syringes, which are then again packed for sale in bundles of pharmaceutical primary packagings, e.g. the SCHOTT iQ® platform.

During or after the solidification of the molten glass in the Danner process or Vello process, defects within the endless glass tube may be generated and after the solidification, particles may deposit on the solidified glass tube. For example, in the separating process, small glass particles are formed which may drop on the glass tube. In addition, as longer the glass tubes are exposed to the environment, as more dust accumulates on the surface of the glass tubes. Moreover, abraded particles from the drawing unit, the conveyor belts and conveyor rolls further contaminate the glass tubes and every contact of the glass tube to a conveyor belt or roll may cause small damages on the outer surface.

A specific position, where all the above described defects are minimized, is between the point where the molten glass solidifies and the drawing unit. For this reason, it is advantageously to inspect the endless glass tube at this specific position. At this specific position very small damages, like air bubbles (also called airlines), knots or crystals, within the wall of the glass tube can be well detected, since they are not superimposed by particles or further defects and it may happen that small defects are overlooked, if the separated glass tubes are inspected at a later stage. These small defects, which are overlooked by an inspection apparatus at the above described specific position, may be persistent through all further production steps. If this is the case, final products, like pharmaceutical primary packagings, exhibit these defects and may cause problems. One problem, which might occur, is that small particles are loosely bound in the cavity of open air bubbles or parts of the open air bubble could break off and are released when the pharmaceutical primary packagings are filled with fluid or shaked strongly. In addition, when a plug is used to empty a fluid out of the pharmaceutical primary packaging, for example a syringe, then fluid may bypass the plug leading to an inaccurate dosage of the fluid. Moreover, the fluid, e.g. the pharmaceutical injection solution, may react with the environment, e.g. air, through the bypass, leading to a change of the properties or efficacy of the fluid.

In summary, it is obvious that a favorable position to inspect small defects within the wall of the glass tube is a position between the point where the molten glass solidifies and the drawing unit. However, there are several problems, which come along when the endless glass tube is inspected at this specific position:

- the drawing speed and the rotation speed around the rotation axis of the glass tube is set by the Danner process or Vello process and/or the drawing unit;
- the inspection cannot be repeated at a later stage without exhibiting the above-described additional environmental or process effects;
- a depth resolution of the entire lateral surface is necessary to determine the position of the defects before the glass tube reaches the drawing unit;
- due to the high drawing speed of the drawing unit, it may occur that the glass tube vibrates and this may change the position and/or orientation of the circular elongated element within the inspection apparatus.

Thus, an object of the present invention is to provide an apparatus or method for the inspection of a circular elongated element which can detect small defect within (the wall of) a circular elongated element independent of the speed of the movement along the rotation axis and the rotation speed around the rotation axis of the circular elongated element. Further, it is an object of the present invention to provide an apparatus or method, which on the one hand can detect, quantify, and classify defects within (the wall of) the circular elongated element, and/or on the surface, and on the other hand ensures that all defects within (the wall of) the circular elongated element have been detected, i.e. consistently determines that the inspection is sufficiently accurate. Moreover, an object of the present invention is to provide an apparatus or method for the inspection of a circular elongated element which is able to inspect a circular elongated element, e.g. an endless glass tube, produced by the Danner or the Vello process and can be positioned between the point where the molten glass solidifies and the drawing unit. Further, an object of the invention is to provide an apparatus or method for the inspection of a circular elongated element, wherein the kind of defect and/or the position of the defect can be determined. Moreover, an object of the present invention is to provide an inspection apparatus or method, which inspects the entire circular elongated element before it reaches the drawing unit. Another object of the present invention is to provide a bundle of separated circular elongated elements or pharmaceutical packagings having reduced defects. Another object of the present invention is that the/all cylindrical portion(s) of the circular elongated element(s), preferably all separated circular elongated element(s) are reliably inspected.

These and other objects are solved by an apparatus for the inspection of a circular elongated element, comprising a motion unit; a light emitting unit comprising a first light source and preferably a second light source, and a light receiving unit comprising a first camera and a second camera; wherein the motion unit is configured to move, preferably to continuously move, the circular elongated element relative to at least one camera of the light receiving unit; wherein the first light source of the light emitting unit emits a first light beam for illuminating the circular elongated element; and wherein the light receiving unit is configured such that the centerline of the first camera and the centerline of the second camera hit the lateral surface of a cylinder defined by the circular elongated element, wherein the cylinder has a height h of 10 cm or less.

Another aspect of the invention is an apparatus for the inspection of a circular elongated element, comprising a control unit which is configured to obtain information about the orientation of the circular elongated element.

Another aspect of the invention is a Method for the inspection of a circular elongated element, preferably using an apparatus according to any embodiment disclosed herein, comprising the following steps:

- drawing a circular elongated element along the rotation axis of the circular elongated element,
- illuminating the circular elongated element while the circular elongated element is drawn along the rotation axis of the circular elongated element, and
- acquiring a first image with a first camera and a second image with a second camera while the circular elongated element is illuminated,
  wherein the centerline of the first camera and the centerline of the second camera hit the lateral surface of a cylinder defined by the circular elongated element,
  wherein the cylinder has a height h of 10 cm or less.

Another aspect of the present invention is a method for the inspection of a circular elongated element, preferably conducted by an apparatus according to any one of the preceding claims, comprising the following steps:

- illuminating the circular elongated element with a first light beam emitted by a first light source of a light emitting unit;
- acquiring an image of at least a part of the light beam emitted by the first light source and reflected by the circular elongated element by the first camera of the light receiving unit; and
- comparing the image with a set point, preferably a reference image, to obtain information about the orientation of the circular elongated element.

Another aspect of the invention is a bundle of separated circular elongated elements; comprising 5 or more separated circular elongated elements;
wherein all separated circular elongated elements exhibits no open and/or, preferably and, closed air bubble having a length of 2000 $\mu$m or more, and/or
wherein all separated circular elongated elements exhibits no open and/or, preferably and, closed air bubble having a width of 100 $\mu$m or more;
preferably wherein the properties of the air bubbles are obtainable by an apparatus, system and/or method according to any embodiment disclosed herein.

Another aspect of the invention is a bundle of separated circular elongated elements comprising 5 or more separated circular elongated elements being inspected by an apparatus, system and/or method according to any embodiment disclosed herein.

Another aspect of the invention is the use of a separated circular elongated element being obtainable by an apparatus, system and/or method according to any embodiment disclosed herein for the production of a pharmaceutical packaging or a technical glass.

Definitions

Herein, all preferred embodiments of the apparatus also apply for the method, the bundle and the use described herein and vice versa.

Inspection

Herein, inspection means the detection, quantification, and/or, preferably and, classification of defects in or on, preferably in, the circular elongated element, preferably the cylindrical portion of the circular elongated element. Preferably, the apparatus for the inspection of a circular elongated element at least detects and quantifies the defects in the circular elongated element, more preferably detects, quantifies, and classifies the defects in the circular elongated element. Classification herein means, for example, to classify the kind of defect, e.g. open air bubble (also called airline), closed air bubble, knot (also called glass in glass defect), particles (e.g. dust, glass, metal, salt, crystal), dropper or striae, and whether the defect is in the glass (wall) or on the surface. The defects are described below in detail.

"being inspected by an apparatus and/or method" herein means that:

- the (separated) circular elongated element(s) is/are inspected by an apparatus, method and/or system according to any embodiment described; and/or, preferably and,
- the size, kind, location and/or, preferably and, amount of (a) defect(s), e.g. air bubble(s), in the glass (wall) or on the surface of the (separated) circular elongated element(s) is/are obtainable by an apparatus, method and/or system according to any embodiment described; and/or, preferably and,
- the form- and texture features from image processing and/or the class of (a) defect(s), e.g. air bubble(s), in the glass (wall) or on the surface of the (separated) circular elongated element(s) is/are obtainable by an apparatus, method and/or system according to any embodiment described; and/or, preferably and,
- the (separated) circular elongated element(s) exhibiting a specific size, kind, location and/or, preferably and, amount of (a) defect(s), e.g. air bubble(s), in the glass (wall) or on the surface are sorted out; and/or, preferably and,
- the orientation of the (separated) circular elongated element(s) is/are obtainable by an apparatus, method and/or system according to any embodiment described; and/or, preferably and,
- the (separated) circular elongated element(s) exhibiting a changed orientation during the inspection are sorted out.

The defects are described below in detail.

Channel

Herein, a channel is a specific type of an electromagnet radiation. One channel might differ from another channel either in the wavelength of the electromagnet radiation, the polarization of the electromagnet radiation, or the wavelength and the polarization of the electromagnet radiation. Preferably, the wavelength of the electromagnet radiation and the polarization of the electromagnet radiation is selected from the following i) and/or ii):

i) Wavelength of the electromagnet radiation

A channel preferably has one or more, more preferably one, of the following wavelengths (if not stated otherwise, the lower value of a range of a wavelength is always exclusive):

| | |
|---|---|
| X-ray | 10 pm to 100 nm; |
| UV-C | 100 nm to 280 nm; |
| UV-B | 280 nm to 315 nm; |
| UV-A | 315 nm to 400 nm; |
| UV | 100 nm to 400 nm; |
| blue | 400 nm to 490 nm; |
| green | 490 nm to 570 nm; |
| yellow | 570 nm to 600 nm; |
| orange | 600 nm to 620 nm; |
| red | 620 nm to 780 nm; |
| visible | 400 nm to 780 nm; |
| NIR | 780 nm to 2.5 $\mu$m; |

(continued)

| | |
|---|---|
| MIR | 2.5 $\mu$m to 50 $\mu$m; |
| FIR | 50 $\mu$m to 1 mm; |
| IR | 780 nm to 1 mm; |
| UV+visible | 100 nm to 780 nm; |
| UV+visible+IR | 100 nm to 1 mm; and/or |
| visible+IR | 400 nm to 1 mm. |

ii) Polarization of light

A channel might have one of the following polarization:

linear polarization; or
elliptical polarization, preferably circular polarization.

Herein, circular polarization is a special kind of elliptical polarization.

Camera

Herein, a camera preferably comprises a sensor. Normally, the sensor has a rectangular shape and/or is a linear or a multi-line sensor. In the drawing processes, a linear or a multi-line sensor has the advantage that, due to higher framerates, smaller exposure times, and lower gain factors in combination with the web inspection in the Danner process or Vello process, the signal contrast is increased and therewith the detection quality and the classification quality is increased. The sensor detects electromagnetic radiation by converting the variable attenuation of electromagnet radiation into signals, e.g. small bursts of current, that convey the information. Preferably, the information is used to make an image. Preferably, the camera comprises a housing and/or a lens, more preferably a lens with a lens mount system and/or a distance holder. The housing prevents the sensor from diffuse electromagnet radiation. The lens gathers electromagnet radiation from the object being observed and focuses the electromagnet radiation. Thus, in a preferred embodiment of the present invention, a camera comprises a sensor, preferably a sensor and a lens, more preferably a sensor, a lens and a housing.

Light source

Herein, a light source preferably comprises a light emitting plane. The light emitting plane emits electromagnetic radiation, e.g UV, visible and/or IR light. Normally, the light emitting plane has a rectangular, elliptical or circular shape. The light source might emit telecentric or diffuse electromagnetic radiation, preferably diffuse electromagnetic radiation.

Centerline

The centerline of a camera or a light source is a normal, which extends from the middle of the sensor and the light emitting plane, respectively. If the sensor or light emitting plane exhibits a rectangular shape, the middle of the sensor or light emitting plane is the point where the diagonals cross each other. If the sensor or light emitting plane exhibits an elliptical and circular shape, respectively, the middle of the sensor or light emitting plane is the midpoint, also called center, of the ellipse and circle, respectively. Preferably, the centerlines of all cameras and/or of all light sources of the light receiving unit and/or light emitting unit hit the lateral surface of the circular elongated element. More preferably, the centerlines of all cameras and/or of all light sources of the light receiving unit and/or light emitting unit cross a cylinder defined by the rotation axis of the circular elongated element + 5mm, more preferably + 3 mm, more preferably + 1 mm, in all directions. If not stated otherwise, the angle or the like of a centerline of a camera and/or a light emitting plane refers to the centerline, when it hits the lateral surface of the circular elongated element, even if, for example, the centerline is reflected, either before or after it passes the circular elongated element, by a mirror.

Mirror

The apparatus may comprise one or more mirrors. Preferably, the apparatus comprises (a) mirror(s), which is/are between the first camera and/or, preferably and, the second camera, more preferably between all cameras of the light receiving unit, and the circular elongated element reflecting light from the circular elongated element to the first camera, preferably to the first and the second camera, respectively, more preferably to the respective camera of the light receiving unit. Alternatively or additionally, the apparatus may comprises (a) mirror(s), which is/are between the first light source and/or, preferably and, the second light source, more preferably between all light sources of the light emitting unit, and the circular elongated element reflecting light from the first light source and/or, preferably and, the second light source, more preferably between all light sources of the light emitting unit, to the circular elongated element.

The mirror(s) might be (a) planar, convex or concave; totally-reflective mirror(s), semi-transparent mirror(s), one-way mirror(s), diffractive optical element(s) or beam splitter(s), preferably (a) planar totally-reflective mirror(s).

Circular elongated element

Herein a circular elongated element is an element that comprises a cylindrical portion, preferably only one cylindrical portion. The rotation axis of the circular elongated element is defined by the rotation axis of the cylindrical portion of the circular elongated element. The cylinder defined by the circular elongated element is a part of the cylindrical portion of the circular elongated element. The cylindrical portion of the circular elongated element might be hollow. Moreover, the circular elongated element might exhibit an open and/or a closed end and/or a narrowing and/or broadening. Preferably, the circular elongated element is an tube or a rod, preferably a tube.

The material of the circular elongated element is not particularly limited. Preferably, the circular elongated element comprises, more preferably is made of, a glass, more preferably a borosilicate glass or an aluminosilicate glass, more preferably a borosilicate glass; and/or a polymer, more preferably a cyclic olefin copolymer (COC) or a cyclic olefin polymer (COP), more preferably a cyclic olefin copolymer (COC). Preferably, the circular elongated element is made of a glass, preferably a borosilicate glass wherein the circular elongated element is obtainable by the Danner, Vello, down-draw, vertical drawing, centrifugation or blowing process, more preferably the Danner process or Vello process, more preferably the Danner process. Preferably, the circular elongated element is an endless glass element, i.e. an endless glass tube obtainable by one of the processes described above and which is not yet separated, e.g. cut to length. This has the advantage that the circular elongated element does not exhibit glass particles on the surface which may be generated when the circular elongated element is separated, e.g. cut to length.

The inner and outer diameter and the thickness of the circular elongated element, preferably the cylindrical portion of the circular elongated element is not particularly limited.

Preferably, the one cylindrical portion of the circular elongated element exhibits an outer diameter of 0.5 mm to 500 mm, preferably 2 mm to 63 mm, more preferably 5 mm to 60 mm, more preferably 6 mm to 50 mm.

Preferably, the circular elongated element is a tube and the cylindrical portion of the circular elongated element exhibits an inner diameter of 0.1 mm to 250 mm, preferably 1 mm to 32.5 mm, more preferably 5 mm to 30 mm, more preferably 10 mm to 25 mm, more preferably 15 mm to 20 mm.

Preferably, the circular elongated element is a tube and the cylindrical portion of the circular elongated element exhibits a wall thickness of 0.001 mm to 250 mm, preferably 0.1 mm to 32.5 mm, more preferably 0.2 mm to 30 mm, more preferably 0.25 mm to 25 mm.

The circular elongated element might be endless or a separated circular elongated element (see below). Preferably, the circular elongated element is an endless circular elongated element, i.e., for example, a circular elongated element which is continuously produced by the Danner process or Vello process and is not separated, e.g. cut to length, before it is inspected with an apparatus or method described herein.

Preferably, the apparatus comprises a circular elongated element, preferably an endless glass tube.

The circular elongated element is preferably obtainable by a Danner process, a Vello process, a down draw process or an injection molding process; more preferably, by a Danner process, a Vello process or a down draw process, more preferably by a Danner process or a Vello process.

Separated circular elongated element

As described below, the endless circular elongated element is separated, e.g. cut to length, by a separating unit to obtain a separated circular elongated element, e.g. a tube or rod, preferably a tube. After the separating process, the separated circular elongated element may be further separated, e.g. by another separating process and/or melting process, and/or formed by a hot molding process to obtain also a separated circular elongated element, e.g. a vial, a syringe, a carpule, a cartridge or an ampule. Preferably, the separated circular elongated element is selected from a tube, a vial, and a syringe, more preferably the separated circular elongated element is a tube or a syringe, more preferably a tube. Consequently, a separated circular elongated element comprises a cylindrical portion and/or is preferably obtainable by a circular elongated element, preferably being inspected by an apparatus according to an embodiment of the description.

The cylindrical portion of the separated circular elongated element preferably exhibits the same inner and outer diameter and wall thickness as the cylindrical portion of the circular elongated element.

The length of the separated circular elongated elements is not particular limited. Preferably, the length of the circular elongated element or the cylindrical portion of the circular elongated element, preferably the cylindrical portion of the circular elongated element, is 2 cm or more, preferably 3 cm or more, more preferably 4 cm or more, more preferably 5 cm or more, more preferably 10 cm or more, more preferably 20 cm or more, more preferably 40 cm or more, more preferably 60 cm or more, more preferably 80 cm or more, more preferably 120 cm or more; and/or, preferably and, 1000 cm or less, preferably 500 cm or less, more preferably 300 cm or less, more preferably 250 cm or less, more preferably 150 cm or less. Moreover, the circular elongated element might exhibit an open and/or closed end and/or a narrowing and/or broadening, and/or a flange, and/or a Luer/Lock-connector.

In a preferred embodiment, the separated circular elongated element being inspected by an apparatus according to an embodiment of the description or a method according to an embodiment of the description or a bundle according to an embodiment of the description are used for the production of pharmaceutical packagings, e.g. vials, cartridges, syringes, carpules, ampules, preferably syringes and/or carpules; or technical glass, e.g. laboratory, pharma, and chemical industry devices with high thermal-shock and corrosion resistance, photobioreactors, sprinkler fuses, decoration and presentation glasses as well as for design and architecture, giftware, explosion proof lightning and electronical devices, protection glasses, integrated in chemical equipment, sight glasses, ozone generators, insulators, heat exchangers, solar receiver and as a component in solar technology, components in the automobile and aeronautical and naval industry, like bulbs (for example H7 or H4), or protection circuits (like in airbags or used in belt tensioners as safety relevant components), as part of safety components and integrated in electornical, magnetic, radiating, hydraulical, and/or pneumatic circuits. Herein special kind of a circular elongated element is a separated circular elongated element. Thus, a circular elongated element is preferably a separated circular elongated element. If not stated otherwise all definitions and restrictions of a circular elongated element also apply for a separated circular elongated element and vise versa. Preferably, the apparatus comprises a separated circular elongated element.

The separated circular elongated element is preferably obtainable by a Danner process, a Vello process, a down draw process or an injection molding process; more preferably, by a Danner process, a Vello process or a down draw process, more preferably by a Danner process or a Vello process.

Bundle

The separated circular elongated elements are preferably packed in a bundle.

Herein, a bundle is a trading, loading or packaging unit for distribution of separated circular elongated elements, preferably empty circular elongated elements, i.e. circular elongated elements filled with a gas, e.g. air. For example, products usually, but not necessarily, of the same kind are combined as bundles when ordered together in retail or bundled in logistics. According to the invention, the separated circular elongated elements can be separated by a spacer, for example a plastic abd/or paper sheet, so that they are not in contact with each other during transport. Usually, but not necessarily, the bundle is at least partly covered by a plastic foil. Preferably, one bundle contains 5 or more, preferably 5 to 5000, more preferably 10 to 1000, more preferably 25 to 500, more preferably 50 to 300, more preferably 75 to 250 circular elongated elements. An example of a bundle is the DENSOPACK® or the SCHOTT iQ® platform from SCHOTT AG. Due to economic reasons, preferably the bundle contains 20 to 1000, more preferably 40 to 600, more preferably 50 to 300, more preferably 75 to 250 cylindrical bodies, which are at least partly covered by a plastic foil and wherein the cylindrical bodies are in direct contact to each other within the bundle. Preferably, several, e.g. 2 to 1000 bundles, preferably 20 to 200 bundles are stacked on a pallet. Thus, according to one aspect of the invention, a pallet comprises 2 to 1000 bundles, preferably 20 to 200 bundles.

Relative Movement and rotation

Herein, a movement of the circular elongated element relative to at least one camera of the light receiving unit is a movement wherein the distance of a plane perpendicular to the rotation axis of the cylindrical portion of the circular elongated element and at least one camera of the light receiving unit changes over time. In contrast thereto, a rotation is a movement, wherein the distance of a plane perpendicular to the rotation axis of the cylindrical portion of the circular elongated element and at least one camera of the light receiving unit does not change over time.

Defects

Defects herein comprise, for example, particles within the material, e.g. glass particles, metals, salts, crystals, open or closed air bubbles (also called airlines), knots (also called glass in glass defects), droppers and/or striae; and defects on the glass, for example, dust or glass particles.

Herein, the length of a defect is the longest expansion of a defect measured in a view along a normal of the outer surface of the (separated) circular elongated element. Herein, the width is the longest expansion of the defect measured perpendicular to the longest expansion of the defect and in a view along a normal of the outer surface of the (separated) circular elongated element.

In particular, the apparatus and method described herein can detect, quantify and characterize open or closed air bubbles.

The minimum length of an open or closed air bubble which can be detected and characterized with an apparatus according to an embodiment of the description and/or a method according to an embodiment of the description is 30 $\mu$m or more.

The minimum width of an open or closed air bubble which can be measured with an apparatus according to an embodiment of the description and/or a method according to an embodiment of the description is 3 $\mu$m or more.

Preferably, circular elongated elements are not sorted out, if they exhibit:

i) no open air bubble having a length of 2000 $\mu$m or more, preferably 1000 $\mu$m or more, more preferably 500 $\mu$m or more, more preferably 250 $\mu$m or more, more preferably 100 $\mu$m or more, more preferably 50 $\mu$m or more, more preferably 30 $\mu$m or more; and/or, preferably and,

ii) no open air bubble having a width of 100 $\mu$m or more, preferably 50 $\mu$m or more, more preferably 28 $\mu$m or more, more preferably 10 $\mu$m or more, more preferably 5 $\mu$m or more, more preferably 3 $\mu$m or more; and/or, preferably and,

iii) no closed air bubble having a length of 2000 $\mu$m or more, preferably 1000 $\mu$m or more, more preferably 500 $\mu$m or more, more preferably 250 $\mu$m or more, more preferably 100 $\mu$m or more, most preferably 50 $\mu$m or more, more preferably 30 $\mu$m or more; and/or, preferably and,

iv) no closed air bubble having a width of 100 $\mu$m or more, preferably 50 $\mu$m or more, more preferably 28 $\mu$m or more, more preferably 10 $\mu$m or more, more preferably 5 $\mu$m or more, more preferably 3 $\mu$m or more.

Point where the molten glass solidifies

Herein, the point where the molten glass solidifies is the point at which the temperature of the material of the (separated) circular elongated element reached the glass transition temperature of the material.

Light receiving unit

According to one embodiment of the invention, the apparatus for the inspection of a circular elongated element comprises a light receiving unit comprising a first camera and a second camera; wherein the light receiving unit is configured such that the centerline of the first camera and the centerline of the second camera hit the lateral surface of a cylinder defined by the circular elongated element, wherein the cylinder has a height h of 10 cm or less.

Due to the fast motion of the circular elongated element relative to at least one camera of the light receiving unit, the inventors recognized that the circular elongated element vibrates and thus, changes its orientation. In addition, due to the Danner process or Vello process, the circular elongated element commonly rotates. The inventors recognized that, due to these confounding factors, an accurate measurement of small defects is impossible, if the height of the cylinder on which the centerlines of the cameras hit is too long. If, however, the height of the cylinder is 10 cm or less, the accuracy of the inspection can be significantly improved.

In a preferred embodiment, the cylinder (7) has a height h of 9 cm or less, preferably 8 cm or less, more preferably 7 cm or less, more preferably 6 cm or less, more preferably 5 cm or less, more preferably 4 cm or less, more preferably 3 cm or less, more preferably 2 cm or less, more preferably 1 cm or less, more preferably 0.9 cm or less, more preferably 0.8 cm or less, more preferably 0.7 cm or less, more preferably 0.6 cm or less, more preferably 0.5 cm or less, more preferably 0.4 cm or less, more preferably 0.3 cm or less, more preferably 0.2 cm or less, more preferably 0.1 cm or less, more preferably 0.05 cm or less, more preferably 0.02 cm or less; and/or, preferably and, 0.001 cm or more, preferably 0.01 cm or more.

In particular, if the height of the cylinder is set to 0.5 cm or less, preferably 0.2 cm or less, the detection accuracy significantly further increases and defects having a very short dimension can be detected. As shorter the length of the cylinder as more accurate is the inspection. However, as more cameras the light receiving unit comprises, as more difficult it is to arrange these cameras around the circular elongated element. A length of the cylinder, wherein the cameras can be well arranged and wherein a good inspection accuracy can be achieved is a length of 0.01 cm or more and 0.5 cm or less, preferably 0.2 cm or less.

In a preferred embodiment, the light receiving unit is configured such that the centerline of the first camera and/or, preferably and, the centerline of the second camera, more preferably the centerlines of all cameras of the light receiving unit, cross(es) a plane perpendicular to the rotation axis of the circular elongated element in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°, wherein an angle of 0° means that the centerline of the camera(s) is parallel to a plane perpendicular to the rotation axis of the circular elongated element; and/or, preferably and, the light receiving unit is configured such that the centerline of the first camera and/or, preferably and, the centerline of the second camera, more preferably the centerlines of all cameras of the light receiving unit, cross(es) a plane perpendicular to the rotation axis of the circular elongated element in an angle of 0° or more, preferably 1° or more, more preferably 2° or more, more preferably 3° or more, more preferably 4° or more, more preferably 5° or more, more preferably 10° or more, more preferably 20° or more, wherein an angle of 0° means that the centerline of the camera(s) is parallel to a plane perpendicular to the rotation axis of the circular elongated element.

The inventors surprisingly found that if the angle of the centerline(s) of the camera(s) and a plane perpendicular to the rotation axis of the circular elongated element is small, the accuracy of the apparatus can be further improved. However, if the light receiving unit comprises several cameras, e.g. six or more cameras, it is difficult to arrange these cameras in an above described angle of about 0°. For this reason, especially if the light receiving unit comprises three or more cameras, preferably six or more cameras, the angle is preferably more than 0°. Thus, the interference of the different cameras of the light receiving unit and the different light sources of the light emitting unit can be reduced. In particular, if the angle is between 1° and 30°, the interference is very low and the accuracy is still very high. To achieve an angle of 0°, preferably a beam splitter or a head-up display splitting technology can be included.

According to the invention, the light receiving unit comprises a first and a second camera. In a preferred embodiment, the light receiving unit comprises 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras.

As more cameras, as more accurate is the inspection of the circular elongated element. However, if the light receiving unit comprises too many cameras, an arrangement of these cameras is very difficult.

Thus, preferably, the light receiving unit comprises 1024 or less, preferably 512 or less, more preferably 256 or less, more preferably 128 or less, more preferably 64 or less, more preferably 48 or less, more preferably 32 or less, more preferably 24 or less, more preferably 12 or less, cameras.

In a preferred embodiment the light receiving unit (5) is configured such that the centerlines of the 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras hit the lateral surface of the cylinder (7) defined by the circular elongated element (3); and/or, preferably and, the light receiving unit (5) is configured such that the centerlines of the 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras cross a plane perpendicular to the rotation axis of the circular elongated element in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°, wherein an angle of 0° means that the centerline of the camera(s) is parallel to a plane perpendicular to the rotation axis of the circular elongated element; and/or, preferably and, wherein the light receiving unit (5) is configured such that the centerlines of the 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras cross a plane perpendicular to the rotation axis of the circular elongated element in an angle of 0° or more, preferably 1° or more, more preferably 2° or more, more preferably 3° or more, more preferably 4° or more, more preferably 5° or more, more preferably 10° or more, more preferably 20° or more, wherein an angle of 0° means that the centerline of the camera(s) is parallel to a plane perpendicular to the rotation axis of the circular elongated element.

Thus, the accuracy can be further improved and very small defects can be detected. In addition, the control unit is more efficient. Furthermore, it is possible to inspect the entire circular elongated element without rotating it around 360°. Moreover, large wall thickness to outer diameter ratios are covered by the inventors' finding using this web inspection arrangement in combination with the multiplexing technology, including polarization and/or beam splitting to increase the dimensionality of channels to be inspected (for example in parallel to inspect stress, airlines in walls as further independent channels that can be separately inspected and/or mixed).

In general, the focusing of the cameras is not particularly limited. In a preferred embodiment, the first camera and/or, preferably and, the second camera, more preferably all cameras of the light receiving unit, is/are focused on an area including the outer surface or wall of the circular elongated element, and/or wherein the outer surface or wall of the circular elongated element, facing to the first camera and/or, preferably and, the second camera, is at least partially within the area of depth of focus of the first camera and/or, preferably and, the second camera, respectively; and/or

wherein the outer surface or wall of the circular elongated element, facing to a respective camera of the light receiving unit, is at least partially within the area of depth of focus of the respective camera of the light receiving unit.

If the cameras of the light receiving unit are configured as described in one of the alternatives above, it is possible to improve the accuracy of the inspection. Especially the spatial detection of the defects can be improved, if the cameras are focused as described in one of the alternatives described above. A person skilled in the art knows how to focus the cameras (for example: https://www.edmundoptics.eu/knowledge-center/application-notes/imaging/depth-of-field-and-depth-of-focus/; version of 10.09.2020).

The amount of megapixels of the camera(s) is not particularly limited. Preferably, the first camera and/or, preferably and, the second camera, more preferably all cameras of the light receiving unit, exhibit(s) 1 pixel or more, preferably 1 kilopixel or more, preferably 1 megapixel or more, more preferably 3 megapixel or more, more preferably 5 megapixel or more, more preferably 10 megapixel or more, more preferably 100 megapixel or more; and/or, preferably and, 1000 megapixel or less, preferably 200 megapixel or less, more preferably 150 megapixel or less.

The shutter speed of the camera(s) is not particularly limited. Preferably, the first camera and/or, preferably and, the second camera, more preferably all cameras of the light receiving unit, exhibit(s) a shutter speed of 1 s or less, preferably 1 ms or less, more preferably 100 $\mu$s or less, more preferably 20 $\mu$s or less, more preferably 1 $\mu$s or less; and/or, preferably and, 0.01 $\mu$s or more.

The pixel size of the camera(s) is not particularly limited. Preferably, the first camera and/or, preferably and, the second camera, more preferably all cameras of the light receiving unit, exhibit(s) a pixel size of 1 $pm^2$ to $1mm^2$, preferably 10 $nm^2$ to 1 $mm^2$, more preferably 20 $nm^2$ to 0.8 $mm^2$, more preferably 50 $nm^2$ to 0.6 $mm^2$, preferably 80 $nm^2$ to 0.5 $mm^2$.

As higher the amount of megapixels and/or the pixel size of the camera(s) and as lower the shutter speed, as more accurate is the inspection. Especially a low shutter speed is required to inspect the entire circular elongated element.

In a preferred embodiment, wherein the first camera and/or, preferably and, the second camera, more preferably all cameras of the light receiving unit, is/are configured to acquire 1 images per second or more, preferably 100 images per second or more, more preferably 5000 images per second or more, more preferably 10000 images per second or more, more preferably 25000 images per second or more; and/or, preferably and, $1*10^6$ images per second or less, preferably $5*10^5$ images per second or less, more preferably $3*10^5$ images per second or less, more preferably $1*10^5$ images per second or less, more preferably $5*10^4$ images per second or less, more preferably $1*10^4$ images per second or less, more preferably $1*10^3$ images per second or less.

Especially, if the camera(s) is/are configured to acquire images with 10.000 lines per second or more, preferable 40.000 lines per second or more, it can be ensured that the entire circular elongated element can be inspected within a short time interval. This might be necessary, if the motion unit is configured to move, preferably to continuously move, the circular elongated element relative to at least one camera of the light receiving unit with a high speed. If the motion unit moves the circular elongated element relative to at least one camera of the light receiving unit with a high speed, e.g. 0.01 m/s or more., the productivity can be improved.

The angle between a line defined by the centerline of the first camera and a line defined by the centerline of the second camera in a view along the rotation axis of the circular elongated element is not particularly limited. Preferably, the angle between a line defined by the centerline of the first camera and a line defined by the centerline of the second camera in a view along the rotation axis of the circular elongated element is 1° or more, preferably 5° or more, more preferably 10° or more, more preferably 30° or more, more preferably 45° or more, more preferably 60° or more, more preferably 90° or more, more preferably 120° or more, more preferably 150° or more, more preferably 160° or more; and/or, preferably and, 180 or less, preferably less than 180°, more preferably 150° or less, more preferably 120° or less, more preferably 90° or less, more preferably 60° or less, more preferably 30° or less. This further improves the spatial representation of the defects. In addition, the control unit is more efficient.

Preferably, between the first camera and/or, preferably and, the second camera, more preferably between all cameras of the light receiving unit, and the circular elongated element is/are (a) mirror(s) reflecting light from the circular elongated element to the first camera, preferably to the first and the second camera, respectively, more preferably to the respective camera of the light receiving unit.

This makes it possible to arrange the cameras more compact. Especially, if the light receiving unit comprises 6 or more cameras, this significantly simplifies the arrangement. Furthermore, if the centerlines of the cameras are reflected by a mirrors, the cameras simultaneously can be focused by a parallel movement of all cameras in a direction parallel to the rotation axis of the circular elongated element. This simplifies the adjustment of the focusing if circular elongated elements having different diameters are inspected. Preferably, the first camera and/or, preferably and, the second camera, more preferably all cameras of the light receiving unit, and the associated mirror(s) are arranged in a line approximately parallel, preferably parallel, to a line defined by the rotation axis of the circular elongated element; and/or the first camera and/or, preferably and, the second camera, more preferably all cameras of the light receiving unit, is/are arranged in a plane defined by the rotation axis of the circular elongated element and the mirror related to the first camera and/or, preferably and, the second camera, respectively, more preferably of the respective camera of the light receiving unit. Thus, the adjustment of the focusing is further simplified, if circular elongated elements having different diameters are inspected.

The kind of mirror is not particularly limited. Preferably, the mirror is/are (a) planar, convex or concave; totally-reflective mirror(s), semi-transparent mirror(s), one-way mirror(s), diffractive optical element(s) or beam splitter(s), preferably (a) planar totally-reflective mirror(s).

The distance between the cameras, the light sources and the mirrors and the circular elongated element is not particularly limited. Preferably, the first camera and/or, preferably and, the second camera, more preferably all cameras of the light receiving unit; and/or, preferably and, the first light source and/or, preferably and, the second light source, more preferably all light sources of the light emitting unit; and/or, preferably and, the mirrors are arranged equidistant $\pm$ 5 cm, preferably equidistant, with regard to the rotation axis of the circular elongated element.

This further simplifies the focusing of the cameras and an easy implementation and configuration of the light receiving unit and light emitting unit can be achieved. In addition, a high accuracy of the inspection can be ensured.

The arrangement of (a) light source(s) with regard to a camera is/are not particularly limited. In a preferred embodiment, the first light source and/or, preferably and, the second light source, more preferably all light sources of the light emitting unit, is/are bright field light sources with regard to the first camera, preferably to the first and the second camera, respectively, more preferably to the respective camera of the light receiving unit.

As more bright field light sources are used, as more accurate is the inspection, especially as more accurate is the spatial representation of the defects.

In a preferred embodiment, the first light source and/or, preferably and, the second light source, more preferably all light sources of the light emitting unit, is/are dark field light sources with regard to the first camera, preferably to the first and the second camera, respectively, more preferably to the respective camera of the light receiving unit.

Needless to say, a light source can be a bright field light source with regard to one camera and dark field light source with regard to another camera. If the apparatus comprises one or more dark field light sources, the accuracy of the inspection, especially of very small defects, can be further improved. Using with regard to the first and/or, preferably and, the second camera a dark field light source and a bright field light source enhances the accuracy of the inspection. Moreover, adding these additional modes of irradiation to backlight inspection allow a more robust 100 %-inspection for (a) circular elongated element(s) (for example (a) glass tube(s)) with large wall thickness to outer diameter ratios, which are dependent of the used number of cameras - for example 6 cameras or more for a value of up to 1/6 (wall thickness/outer diameter) is favorable. For higher wall thickness/outer diameter-values more cameras are recommended.

In a preferred embodiment, the cameras of the light receiving unit and/or, preferably and, the light sources of the light emitting unit are arranged so that the entire circular elongated element can be inspected independent of the rotation speed of the circular elongated element around the rotation axis of the circular elongated element.

Thus, the inspection system is independent of the rotation speed given by the production process, e.g. of the Danner process or Vello process.

In a preferred embodiment, at least n cameras of the light receiving unit (5) are arranged such that the following equation is fulfilled:

$$a * n = 360° \pm x,$$

wherein n is the number of cameras (51,52,51) of the light receiving unit (5) taken into account, wherein n is 2, preferably 3, more preferably 6, more preferably 12,

a is any angle ($a_{12}, a_{23}, a_{13}$) in [°] in a view along the rotation axis of the circular elongated element (4) between any two adjacent lines (L1,L2,L3) defined by the centerlines of the n cameras (511,521,531) when they hit the lateral surface of the cylinder(7),

wherein x is 100° or less, preferably 50° or less, more preferably 30° or less, more preferably 10° or less. Thus, the entire circular elongated element can be inspected independent of the rotation speed of the circular elongated element around the rotation axis of the circular elongated element. In addition, the control unit is more efficient.

In a preferred embodiment, at least one of the following features is/are fulfilled:

i) wherein at least one camera of the light receiving unit is configured to acquire an image representing only infrared light, i.e. light having a wavelength of 780 to 1 mm; preferably only NIR light, i.e. light having a wavelength of 780 nm to 2.5 $\mu$m; and/or

ii) wherein at least one camera of the light receiving unit is configured to acquire an image representing only visible light, i.e. light having a wavelength of 400 to 800 nm; and/or

iii) wherein at least one camera of the light receiving unit is configured to acquire an image representing only UV light, i.e. light having a wavelength of 100 to 400 nm, preferably only UV-C (100 nm to 280 nm), UV-B (280 nm to 315 nm) and/or UV-A light (315 nm to 380 nm); and/or

iv) wherein at least one camera of the light receiving unit is configured to acquire an image representing only infrared light, i.e. light having a wavelength of 800 nm to 1 mm; and/or

v) wherein at least one camera of the light receiving unit is configured to acquire an image representing only blue light, i.e. light having a wavelength of 400 to 450 nm; and/or

vi) wherein at least one camera of the light receiving unit is configured to acquire an image representing only green light, i.e. light having a wavelength 450 to 530 nm; and/or

vii) wherein at least one camera of the light receiving unit is configured to acquire an image representing only yellow light, i.e. light having a wavelength of 530 to 580 nm; and/or

viii) wherein at least one camera of the light receiving unit is configured to acquire an image representing only red light, i.e. light having a wavelength of 580 to 800 nm; and/or

ix) wherein at least one camera of the light receiving unit is configured to acquire an image representing only linear polarized light; and/or

x) wherein at least one camera of the light receiving unit is configured to acquire an image representing only elliptical polarized light, preferably circular polarized light; and/or

xi) wherein at least one camera, preferably the first camera, of the light receiving unit is configured to acquire an image representing a first wavelength range and a further camera, preferably the second camera, of the light receiving unit is configured to acquire an image representing a second wavelength range and the first wavelength range and the second wavelength range do not overlap; and/or

xii) wherein at least one camera, preferably the first camera, of the light receiving unit is configured to acquire an image representing one kind of polarization of the light and a further camera, preferably the second camera, of the light receiving unit is configured to acquire an image representing a second kind of polarization of the light and the first kind of polarization of the light and the second kind of polarization of the light are not the same, wherein the kind of polarization is selected from linear, circular, and elliptical polarized light; and/or

xiii) wherein the light receiving unit, preferably one camera of the light receiving unit, is configured to distinguish light having different wavelength, preferably to distinguish between green, red, blue and yellow light; and/or

xiv) wherein at least one camera of the light receiving unit, preferably the first camera, can distinguish whether the camera receives light emitted from the first and/or the second light source; and/or

xv) wherein light emitted by the first light source hits the first camera and light emitted by the second light source hits the second camera; and/or

xvi) wherein at least one camera of the light receiving unit is configured to acquire at least two or more, preferably three or more, more preferably four or more images, each considering different wavelength ranges and/or different kinds of polarizations, wherein the kinds of polarization are selected from linear, circular, and elliptical polarized light.

In a preferred embodiment, at least 2 or more, e.g. 3, 4, 5, 6, 7, 8, 9, 10, 11, 12, 13, 14 or 15, or more, more preferably 16 of the above described features are fulfilled. As more channels are used to inspect the circular elongated element, as more detailed the inspection can be performed. Preferably, the light receiving unit can differentiate 2 or more, preferably 3 or more, more preferably 4 or more, different channels. Thus, the accuracy of the inspection can be further improved.

In a preferred embodiment, the apparatus is positioned between the point where the molten glass solidifies and the motion unit. If the apparatus is positioned at this position and the circular elongated element is produced, for example, by the Danner process or Vello process, it is not possible to stop the motion unit or to discontinuously move the circular elongated element. Thus, in a preferred embodiment, the light receiving unit is configured such that at least one camera of the light receiving unit, preferably the first camera and/or, preferably and, the second camera, preferably all cameras of the light receiving unit is/are configured to acquire, preferably continuously acquire, images of the circular elongated element while the motion unit continuously moves the circular elongated element relative to at least one camera of the light receiving unit.

Thus, it can be ensured that the entire circular elongated element can be inspected at this specific position.

Motion unit

According to one embodiment of the invention, the apparatus for the inspection of a circular elongated element comprises a motion unit, wherein the motion unit is configured to move, preferably to continuously move, the circular elongated element relative to at least one camera of the light receiving unit.

In a preferred embodiment, the motion unit is a drawing unit which is configured to draw, preferably to continuously draw, the circular elongated element along the rotation axis of the circular elongated element. Thus, a continuous in line inspection is possible.

In a preferred embodiment, the drawing unit simultaneously rotates the circular elongated element while moving the circular elongated element relative to at least one camera of the light receiving unit.

If the circular elongated element is for example produced by the Danner process, it is necessary to rotate the Danner pipe and thus, commonly the circular elongated element also rotates. If the circular elongated element is inspected between the point where the molten glass solidifies and the motion unit, it is necessary that the drawing unit simultaneously rotates the circular elongated element while moving the circular elongated element relative to at least one camera of the light receiving unit.

In a preferred embodiment, the motion unit is configured to move, preferably to continuously move, the circular elongated element relative to at least one camera of the light receiving unit with a speed of 0.001 m/s to 20 m/s, preferably 0.01 m/s to 15 m/s, more preferably 0.02 m/s to 10 m/s, more preferably 0.05 m/s to 8 m/s, more preferably 0.1 m/s to 7 m/s, more preferably 0.2 m/s to 5 m/s;
and/or, preferably and,
the motion unit is configured to rotate the circular elongated element with a speed of 0.06 rpm to 600 rpm, preferably 0.6 rpm to 300 rpm, more preferably 6 rpm to 240 rpm, more preferably 12 rpm to 180 rpm, more preferably 60 rpm to 120 rpm.

Especially, if the speed is between 0.01 m/s and 7 m/s a fast inspection of the circular elongated element is possible and the inspection is still very accurate. Further, if the rotation speed is low, e.g. 600 rpm or less, preferably 300 rpm or less, more preferably 240 rpm or less, more preferably 180 rpm or less, more preferably 120 rpm or less, more preferably 60 rpm or less, the inspection of the circular elongated element is very accurate.

In a preferred embodiment, the motion unit comprises a coated or uncoated, preferably uncoated, drum, chain, roll or conveyer belt, preferably an uncoated conveyer belt.

The outer diameter of the circular elongated element is reflected by the motion unit. Thus, preferably the motion unit is configured to convey a circular elongated element having an outer diameter of 0.01 cm to 50 cm, preferably 1 cm to 10 cm, more preferably 2 cm to 6 cm.

In preferred embodiment, the motion unit is configured such that the circular elongated element vibrates in the area where the image(s) is/are acquired by the first and the second camera of the light receiving unit with an amplitude of 1.0 mm or less, preferably 0.5 mm or less, most preferably about 0.01 mm, more preferably about 0.001 mm, and/or, preferably and, a frequency of 200 Hz or less, preferably 100 Hz or less, more preferably about 0 Hz.

A person skilled in the art knows how to ensure these values, e.g. by mounting shock absorber in the motion unit. If the vibration is suppressed to the values described above, the accuracy of the inspection can be increased.

In a preferred embodiment, the motion unit is configured to move, preferably to continuously move, the circular elongated element contactless in the area where the images are acquired by the first camera and/or, preferably and, the second camera, more preferably all cameras of the light receiving unit.

Thus, an in line inspection of the entire circular elongated element can be performed easily and no shadows in the images occur. Furthermore, if the light receiving unit comprises several cameras, e.g. 6 cameras or more, the cameras can be easily arranged around the circular elongated element.

Light emitting unit

According to one embodiment of the invention, the apparatus for the inspection of a circular elongated element comprises a light emitting unit comprising a first light source, wherein the first light source of the light emitting unit emits a first light beam for illuminating the circular elongated element.

In a preferred embodiment, the light emitting unit (6) comprises a second light source (62) emitting a second light beam (622);
and/or, preferably and,
the light emitting unit comprises 2 or more, preferably 6 or more, more preferably 12 or more, more preferably 24 or more, more preferably 48 or more; and/or, preferably and, $10^7$ or less, preferably 800 or less, more preferably 400 or less, more preferably 64 or less, light sources.

As more light sources the light emitting unit comprises, the better is the illumination of the circular elongated element. If the circular elongated element is illuminated with several light sources, e.g. 2 or more, preferably 3 or more light sources, more preferably 6 or more light sources, it is possible to illuminate the circular elongated element with different light with regard to the wavelength and/or polarization, i.e. the channel of the electromagnet radiation. In addition, as more light sources the light emitting unit has, the better is the homogenous illumination of the circular elongated element.

In a preferred embodiment, the first light beam and/or the second light beam are at least partially deflected by a mirror before it/they hit(s) the circular elongated element. Preferably, the mirror(s) is/are (a) planar, convex or concave; totally-reflective mirror(s), semi-transparent mirror(s), one-way mirror(s), diffractive optical element(s) or beam splitter(s), preferably (a) planar totally-reflective mirror(s).

In a preferred embodiment, the first and/or the second light source comprise(s) a light emitting plane, wherein the light emitting plane exhibits a size in the range of 1 cm² to 5 m², preferably 1.5 cm² to 1000 cm², more preferably 2 cm² to 100 cm²;

and/or, preferably and,

the first and/or the second light source comprise(s) a light emitting plane, wherein the color temperature of each of the light emitting plane is between 500 K and 18000 K, preferably 1000 K to 10000 K, more preferably 4000 K to 7000 K.

Thus, a homogeneous illumination can be ensured.

In a preferred embodiment, the first and/or the second light source comprise(s) a light emitting plane, wherein the light emitting plane emits red, green, blue, yellow, UV, UV-A, UV-B, UV-C, IR, NIR, MIR or FIR light (for definitions of the exact wavelength see above);

and/or, preferably and,

the light emitting unit comprises at least one arrangement emitting linearly, elliptically or circularly polarized light.

With an illumination of the circular elongated element with several different channels, a more differentiate inspection is possible. In addition, it is easy to ensure that light of a specific light source is detected by only one camera of the light receiving unit.

In a preferred embodiment, the distance between each of the light emitting planes and the rotation axis of the circular elongated element is between 5 to 100 cm, preferably 8 to 40 cm, more preferably 10 to 30 cm. Thus, a homogenous and sufficient illumination of the circular elongated element can be further ensured.

In a preferred embodiment, at least n light sources of the light emitting unit are arranged such that the following equation is fulfilled:

$$a * n = 360° \pm x,$$

wherein n is the number of light sources of the light emitting unit taken into account, wherein n is 2, preferably 3, more preferably 6, more preferably 12, more preferably 24, a is any angle in [°] in a view along the rotation axis of the circular elongated element between any two adjacent lines defined by the centerlines of the n light sources when they hit the lateral surface of the circular elongated element, wherein x is 100° or less, preferably 50° or less, more preferably 30° or less, more preferably 10° or less.

Thus, a homogenous and sufficient illumination of the circular elongated element can be further ensured. In addition, the control unit is more efficient.

In a preferred embodiment, the light emitting unit is configured such that the centerline of the first light source and/or, preferably and, the centerline of the second light source, more preferably of all light sources of the light emitting unit, cross(es) a plane perpendicular to the rotation axis of the circular elongated element in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°, wherein an angle of 0° means that the centerline of the light source(s) is parallel to a plane perpendicular to the rotation axis of the circular elongated element;

and/or, preferably and,

the light emitting unit is configured such that the centerline of the first light source and/or, preferably and, the centerline of the second light source, more preferably of all light sources of the light emitting unit, cross(es) a plane perpendicular to the rotation axis of the circular elongated element in an angle of 0° or more, preferably 1° or more, more preferably 2° or more, more preferably 3° or more, more preferably 4° or more, more preferably 5° or more, more preferably 10° or more, more preferably 15° or more, more preferably 20° or more, wherein an angle of 0° means that the centerline of the light source(s) is parallel to a plane perpendicular to the rotation axis of the circular elongated element.

Thus, a homogenous and sufficient illumination of the circular elongated element can be further ensured. In addition, the control unit is more efficient.

In a preferred embodiment, the light emitting unit is configured such that the centerline of the first light source and/or, preferably and, the centerline of the second light source, more preferably the centerline of all light sources of the light emitting unit hit(s) the lateral surface of the cylinder defined by the circular elongated element;

and/or, preferably and,

the angle between the a line defined by the centerline of one light source, preferably the centerline of the first light source, and a line defined by the centerline of another light source, preferably the centerline of the second light source, of the light emitting unit in a view along the rotation axis of the circular elongated element is 1° or more and 270° or less, preferably 20° to 150°, more preferably 30° to 90°, more preferably 45° to 60°.

Thus, a homogenous and sufficient illumination of the circular elongated element can be further ensured. In addition, the control unit is more efficient.

Control unit

Another aspect of the present invention is an apparatus for the inspection of a circular elongated element, comprising a control unit which is configured to obtain, preferably continuously obtain, information about the orientation of the circular elongated element.

Another aspect of the present invention is an apparatus for the inspection of a circular elongated element, comprising a control unit which is configured to recognize, preferably continuously recognize, whether the rotation axis of the cylinder defined by the circular elongated element changes its orientation.

In general, obtaining information about the orientation of the circular elongated element and/or recognizing whether the rotation axis of the cylinder defined by the circular elongated element changes its orientation can be performed by any kind of control unit, e.g. lasers continuously measuring the distance to several points of the circular elongated element, a light barrier or rolls being in direct contact with the circular element measuring the distance. Preferably, the control unit is a control unit as described below.

For example, an aspect of the present invention is an apparatus for the inspection of a circular elongated element, comprising; preferably wherein the control unit comprises:

a light emitting unit comprising a first light source,
a light receiving unit comprising a first camera, and
a computer unit;

wherein the first light source of the light emitting unit emits a first light beam for illuminating the circular elongated element;

wherein the first camera of the light receiving unit is configured to acquire an image of at least a part of the light beam emitted by the first light source and reflected by the circular elongated element; and

wherein the computer unit is configured to compare at least a part of the image with a set point, preferably a reference image, to obtain information about the orientation of the circular elongated element.

In a preferred embodiment, the light emitting unit further comprises a second light source (62), preferably and the light receiving unit further comprises a second camera (52);

wherein the second light source of the light emitting unit emits a second light beam for illuminating the circular elongated element;

wherein the first camera, preferably and/or the second camera, of the light receiving unit is/are configured to acquire an image of at least a part of the light beam emitted by the second light source and reflected by the circular elongated element; and

wherein the computer unit is configured to compare at least a part of the images with a set point, preferably a reference image, to obtain information about the horizontal and vertical orientation of the circular elongated element during the inspection.

The apparatus can inspect the circular elongated element with an improved accuracy, if the orientation, i.e. the angle between the centerline of first camera a plane perpendicular to rotation axis of the circular elongated element, exhibits a predetermined value and does not change during the (continuous) inspection.

Herein the orientation, preferably the horizontal and/or vertical orientation, may exhibit a predetermined value during the inspection, if the angle between the centerline of the first camera, preferably and/or the centerline of the second camera, and a plane perpendicular to the rotation axis of the circular elongated element differs not more than 0.01° or more, preferably 0.05° or more, more preferably 0.1° or more, more preferably 1° or more, more preferably 2° or more, more preferably 3° or more, more preferably 4° or more, more preferably 5° or more, more preferably 10° or more, from a predetermined value, i.e., for example, a preferred angle obtained when calibrating the apparatus.

A control unit is in particular relevant if the inspection can not be repeated, e.g. if the circular elongated element is an endless glass element and is inspected at a position between the point where the molten glass solidifies and the drawing unit. If the inspection unit comprises a herein described control unit, it is not only possible to inspect the circular elongated element very accurate; in addition, it is possible to determine whether the inspection is reliable. The control unit is particularly important, if the motion unit is configured to move, preferably to continuously move, a circular elongated element along the rotation axis of the circular elongated element with a high speed, e.g. 0.01 m/s or more.

Preferably, the apparatus preferably comprises a storage unit, e.g. a flash memory, a hard drive, a solid state drive or a kind of these (for example personal or industrial computer, or real time systems or FPGAs), on which the result of the comparison can be stored. This stored data can be used to sort out circular elongated elements exceeding a predetermined level of defects or can be used to indicate on the bundle which defects, i.e. size and/or kind, the separated circular elongated elements in the bundle have and whether the measurement is/was reliable.

In a preferred embodiment, the apparatus comprises a control unit, wherein the control unit comprises at least one light source emitting a light beam, preferably the first light source, which is reflected by the circular elongated element and then reaches at least one camera, preferably the first camera, wherein the intensity of that light beam reaching the at least one camera, preferably the first camera, changes when the orientation of the circular elongated element changes.

Thus, a very easy measurement of the orientation can be performed. In addition, no further cameras (and light sources) are needed. Consequently, this kind of control unit is relatively cheap and easy to handle.

In a preferred embodiment, the control unit(s) is/are configured to acquire at least one image and compare the image with a set point, preferably a reference image, preferably compare the brightness of at least a part of the image with at least a part of a reference image. Preferably, the apparatus is configured to sort out the part of the circular elongated element or the separated circular elongated element(s), which are above or below a specific threshold value.

In a preferred embodiment, the light beam is reflected on the lateral surface of a cylinder defined by the circular elongated element. Thus, the inspection is more accurate.

Since the inspection takes place within the cylinder defined by the circular elongated element, the control unit works best, if it measures the orientation of the rotation axis within the region of the cylinder defined by the circular elongated element.

In a preferred embodiment, a change of the intensity of the light beam is a decrease of the intensity of the light beam. In another preferred embodiment, a change of the intensity of the light beam is an increase of the intensity of the light beam.

Preferably, the apparatus comprises at least 2, preferably 4 or more, more preferably 6 or more, more preferably 12 or more, more preferably 18 or more, more preferably 24 or more control units, preferably wherein all control units comprise at least one light source and preferably a respective camera.

Preferably, the first and/or second light source of the control unit is/are the first and/or second light source of the apparatus or vise versa. Preferably, the first and/or second camera of the control unit is/are the first and/or second camera of the apparatus or vise versa. All definitions of the first and/or second camera and/or light source of the control unit apply also for the first and/or second camera and/or light source of the apparatus and vise versa, if not stated otherwise.

Separating and sorting unit

In a preferred embodiment, the apparatus comprises a separating unit, preferably after the motion unit, separating the circular elongated element to length to obtain separated circular elongated elements, preferably wherein the separating is realized manually, semi-automated or automated. In addition, the apparatus comprises a sorting unit, preferably after the separating unit, sorting out separated circular elongated elements: i) exhibiting a specific amount of defects or a specific size of (a) defect(s); and/or ii) exhibiting a specific depth and/or specific class of (a) defect(s) and/or a feature set defined by measurable form or texture features from image processing; and/or iii) recognized by the control unit as to exhibit a changed orientation during the inspection. Thus, separated circular elongated elements inspected by an apparatus and/or method according to any embodiment of the description can be obtained.

Normally, the circular elongated element is moved by the motion unit according to an embodiment described herein, then inspected by an apparatus according to an embodiment described herein and then separated by the separating unit. After the separating unit, the sorting unit sorts out separated circular elongated elements exhibiting not a predetermined value, i.e. above i), ii) or i)+ii). The size, kind, location and/or, preferably and, amount of (a) defect(s) in the material (wall) or on the surface and/or the orientation of the (separated) circular elongated element are obtainable by an apparatus or method according to any embodiment described herein; and are preferably stored on a storage unit. The evaluation, whether a values obtained by an apparatus according to an embodiment described herein exceeds a predetermined set point, can be performed by a computer.

Another aspect of the invention is a system comprising: an apparatus according to any embodiment described herein and a production unit to produce an endless circular elongated element, wherein the distance between the apparatus according to any embodiment described herein and the production unit is 100 m or less, preferably 50 m or less, more preferably 30 m or less.

Due to the short distance between the apparatus and the production unit, a low amount of particles, like dust, on the surface of the circular elongated element can be ensured and the inspection is more accurate and more reliable, for example, no overlapping errors, whereby for example uncritical environment dust could cause an inaccurate detection of the critical defect.

Method

Another aspect of the invention is a method for the inspection of a circular elongated element, preferably using an apparatus according to any embodiment described herein;
comprising the following steps:

- drawing a circular elongated element along the rotation axis (4) of the circular elongated element (3),

- illuminating the circular elongated element while the circular elongated element is drawn along the rotation axis (4) of the circular elongated element (3), and
- acquiring a first image with a first camera and a second image with a second camera while the circular elongated element is illuminated,

wherein the centerline of the first camera (511) and the centerline of the second camera (611) hit the lateral surface of a cylinder (7) defined by the circular elongated element (3),
wherein the cylinder (7) has a height h of 10 cm or less;
and/or, preferably and,
comprising the following steps:

- detecting, quantifying, and classifying defects in the circular elongated element, preferably with an apparatus according to any embodiment described herein;
- separating the circular elongated element after detection, quantification, and classification of the defects to obtain a separated circular elongated element; and
- sorting out separated circular elongated elements:

    i) exhibiting a specific amount of defects or a specific size of (a) defect(s); and/or
    ii) exhibiting a specific depth and/or specific class of (a) defect(s) and/or a feature set defined by measurable form or texture features from image processing; and/or
    iii) recognized by the control unit as to exhibit a changed orientation during the inspection.

Another aspect of the invention is a method for the inspection of a circular elongated element (3), preferably conducted by an apparatus according to any one of the preceding claims, comprising the following steps:

- illuminating the circular elongated element with a first light beam emitted by a first light source (61) of a light emitting unit (6);
- acquiring an image of at least a part of the light beam emitted by the first light source (61) and reflected by the circular elongated element (3) by the first camera (51) of the light receiving unit (5); and
- comparing the image with a set point, preferably a reference image, to obtain information about the orientation of the circular elongated element.

In a preferred embodiment, the method further comprises the steps:

- illuminating the circular elongated element with a second light beam emitted by a second light source (62) of a light emitting unit (6);
- acquiring an image of at least a part of the light beam emitted by the second light source (62) and reflected by the circular elongated element (3) by the first camera (51), preferably and/or the second camera (52), of the light receiving unit (5); and
- comparing the images with a set point, preferably a reference image, to obtain information about the horizontal and vertical orientation of the circular elongated element.

In a preferred embodiment, the comparing is carried out by a computer unit and comprises the following steps:

- receiving (an) image(s) from the first camera (51), preferably and the second camera (52), of the light receiving unit (5);
- comparing, preferably the intensity of, at least a part of the image(s) with a set point, preferably a reference image, to obtain information about the orientation, preferably the horizontal and vertical orientation, of the circular elongated element (3).

In a preferred embodiment, the method further comprises the step of:

- separating the circular elongated element (3) to obtain separated circular elongated elements (3); and/or
- sorting out separated circular elongated elements (3a) recognized by the control unit as to exhibit an orientation, preferably a horizontal and/or vertical orientation, not within a predetermined value during the inspection.

Thus, circular elongated elements and a bundle(s) can be obtained having improved quality.
In a preferred embodiment, the time between the solidification of the circular elongated element, i.e. the point at which the material (glass) of the circular elongated element reaches a temperature below its (glass) transition temperature, and the inspection by an apparatus according to any embodiment described herein is 10 minutes or less, preferably 1 minute or less, more preferably 30 seconds or less, more preferably 10 seconds or less.

Due to the short time between the solidification and the inspection, a low amount of particles, like dust, on the surface of the circular elongated element can be ensured and the inspection of circular elongated element is more accurate and more reliable, for example, no overlapping errors, whereby for example uncritical environment dust could cause an inaccurate detection of the critical defect.

In a preferred embodiment, the apparatus according to any embodiment described herein inspects 0.001 m/s to 20 m/s, preferably 0.01 m/s to 15 m/s, more preferably 0.02 m/s to 10 m/s, more preferably 0.05 m/s to 8 m/s, more preferably 0.1 m/s to 7 m/s, more preferably 0.2 m/s to 5 m/s of the cylindrical portion of the (separated) circular elongated element.

Bundle

Another aspect of the invention is a bundle of separated circular elongated elements, comprising 5 or more, preferably 5 to 5000, more preferably 10 to 1000, more preferably 25 to 500, more preferably 30 to 300, most preferably 60 to 250 separated circular elongated elements; and

preferably being inspected by an apparatus according to any embodiment described herein and/or a method according to any embodiment described herein and/or wherein the properties of the air bubbles are obtainable by an apparatus and/or method according to any embodiment described herein; and

wherein all separated circular elongated elements exhibits no open and/or, preferably and, closed air bubble having a length of 2000 $\mu$m or more, preferably 1000 $\mu$m or more, more preferably 500 $\mu$m or more, more preferably 250 $\mu$m or more, more preferably 100 $\mu$m or more, most preferably 50 $\mu$m or more, more preferably 30 $\mu$m or more; and/or, preferably and,

wherein all separated circular elongated elements exhibits no open and/or, preferably and, closed air bubble having a width of 100 $\mu$m or more, preferably 50 $\mu$m or more, more preferably 30 $\mu$m or more, more preferably 10 $\mu$m or more, more preferably 5 $\mu$m or more, more preferably 3 $\mu$m or more.

Thus, a bundle comprising solely circular elongated elements having improved quality can be provided.

Another aspect of the inventions is the use of a separated circular elongated element being inspected by an apparatus or method according to any embodiment described herein or the bundle according to any embodiment described herein for the production of a pharmaceutical packaging or a technical glass.

Description of the figures

There are several ways how to design and further develop the teaching of the present invention in an advantageous way. To this end, it is to be referred to the patent claims subordinate to the independent patent claims on the one hand and to the following explanation of preferred examples of embodiments of the invention, illustrated by the figures on the other hand. In connection with the explanation of the preferred embodiments of the invention by the aid of the figures, generally preferred embodiments and further developments of the teaching will be explained:

Fig. 1: Schematic side view of a system for the production of a bundle of separated circular elongated elements;
Fig. 2: Schematic side view of an apparatus according to an embodiment;
Fig. 3: Schematic view along the rotation axis of the circular elongated element of a light receiving unit according to an embodiment;
Fig. 4: Schematic side view of a system comprising mirrors according to an embodiment;
Fig. 5a/b: Schematic side view of a control unit according to an embodiment.
Fig. 6a/b/c Block diagrams of methods according to an embodiment.

In the following description of embodiments, the same reference numeral designate similar components.

Reference list

| 1 | system for the production of a bundle of separated circular elongated elements |
| 10 | apparatus |
| 2 | motion unit |
| 21,22 | roll of motion unit |
| 3 | circular elongated element |

| | |
|---|---|
| 3a | separated circular elongated element |
| 3b | bundle of separated circular elongated element |
| 4 | rotation axis of the circular elongated element or of the cylinder |
| 5 | light receiving unit |
| 51,54 | first camera |
| 52,55 | second camera |
| 53 | third camera |
| 511,521,531,541,551 | centerline of the camera |
| 512,522,532 | mirror |
| 513,523,533 | reflected centerline of the camera |
| 6 | light emitting unit |
| 61 to 64 | light source |
| 611,621,631,641 | centerline of the light source |
| 7 | cylinder |
| 71,72,73 | area including the outer surface of the cylinder facing to the camera |
| 101 | motor |
| 102 | Danner pipe |
| 103 | molten glass |
| 104 | position where the molten glass solidifies |
| 105 | separating unit |
| 106 | sorting unit |
| D | diameter of circular elongated element and cylinder |
| H | height of cylinder |
| $L_1, L_2, L_3$ | line defined by the centerlines of the camera |
| $a_{12}, a_{13}, a_{23}$ | angles between two adjacent lines |
| 1001 | first step |
| 1002 | second step |
| 1003 | third step |

Figure 1

Figure 1 shows a schematic side view of a system for the production of a bundle of separated circular elongated elements (3b). The system comprises the apparatus (10) for the inspection of a circular elongated element (3). In the beginning, molten glass (103) flows on a Danner pipe (102), which is mounted on a motor (101). Meanwhile, the motor (101) continuously turns the Danner pipe (102). The motor (101) and the Danner pipe (102) are tilted such that the molten glass (103) reaches the lower end of the Danner pipe (102), where a tube of molten glass (103) is formed. The tube of molten glass (103) cools down and at a specific position (104), the tube of molten glass (103) solidifies and a glass tube, i.e. a circular elongated element (3), is formed. The solid glass tube is drawn by the drawing unit (2) comprising two rolls (21,22). At a position between the point where the molten glass solidifies (104) and the drawing unit (2), the glass tube is inspected by an apparatus (10) which is described in detail in the following figures comprising a light receiving unit (5) and a light emitting unit (6). After the tube has passed the drawing unit (2), it is separated, e.g. cut to length, by a separating unit (105) to obtain separated glass tubes, i.e. separated circular elongated elements (3a). Subsequently, a sorting unit (106) sorts out the glass tubes, in which a specific defect or a specific amount of defects has been detected and finally the separated glass tubes are packed to a bundle of glass tubes, i.e. a bundle of separated circular elongated elements (3b). The obtained bundles are used, for example, to produce various pharmaceutical packagings, e.g. vials, carpoules, ampules or syringes (not shown); or technical circular elongated elements, used for example in electronic components, solar receivers, photobioreactors, fuses, bulbs, water sprinklers, high temperatures and/or chemically resistant protection circuits (for example airbags in cars) and in a variety of other processed products. All these pharmaceutical packagings or technical circular elongated elements have in common that they exhibit at least one cylindrical portion. The pharmaceutical packagings are again packed in bundles of pharmaceutical packagings (not shown), i.e. bundles of separated circular elongated elements (3b, not shown).

Figure 2

Figure 2 shows a schematic side view of an apparatus (10) for the inspection of a circular elongated element (3) according to an embodiment. The apparatus (10) comprises a motion unit (2), a light emitting unit (6) and a light receiving unit (5). The light receiving unit (5) comprises a first camera (51) and a second camera (52), the light emitting unit (6) comprises a first light source (61) and a second light source (62), and the motion unit (2) comprises a first roll (21) and a second roll (22).

The motion unit (2) draws continuously the circular elongated element (3), e.g. a glass tube, along the rotation axis (4) of the circular elongated element (3) such that the circular elongated element (3) continuously moves relative to the cameras (51,52) of the light receiving unit (5). The distance between the first roll (21) and the second roll (22) of the motion unit (2) reflects the outer diameter (D) of the circular elongated element (3). The diameter D of the circular elongated element (3), more precisely the cylindrical portion of the circular elongated element (3), and the diameter (D) of the cylinder (7) are the same. Moreover, the rotation axis (4) of the circular elongated element (3) overlaps with the rotation axis (4) of the cylinder (7). If the circular element (3) is a glass tube, produced for example by the Danner process, it is common that the motion unit (2) rotates the circular elongated element (3) in a similar speed as the rotation speed of the Danner pipe (102), for example 12 rpm, to avoid stress in the circular elongated element (3). The relative movement of the circular elongated element (3) with regard to the cameras (51,52) of the light receiving unit (5) is set by the Danner process and is commonly between 0.1 m/s and 7 m/s.

The first light source (61) and the second light source (62) of the light emitting unit (6) emit a first light beam (611) and a second light beam (621), respectively, for the illumination of the circular elongated element (3). The centerline of the first light beam (611) emitted by the first light source (61) and the second light beam (621) emitted by the second light source (62) hit the lateral surface of a cylinder (7) defined by the circular elongated element (3). The cylinder (7) exhibits, for example, a diameter D of 20 mm and a height h of 0.5 mm. The centerline of the first camera (511) and the centerline of the second camera (521) of the light receiving unit (5) hit also on the lateral surface of the cylinder (7) defined by the circular elongated element (3).

The light sources (61,62) of the light emitting unit (6) continuously illuminate the circular elongated element (3) while the motion unit (2) continuously draws and rotates the circular elongated element (3), i.e. for example an endless glass tube produced by the Danner process. During the continuous illumination and drawing, the cameras (51,52) of the light receiving unit (5) continuously acquire images of at least a part of the cylinder (7) defined by the circular elongated element (3). Each camera acquires enough images such that a computer can merge these images to obtain an endless image from one line of sight of the entire circular elongated element (3). Further, several endless images obtained by several cameras can be merged for example by a computer or by the camera itself to obtain a 3D illustration of the circular elongated element (3).

Figure 3

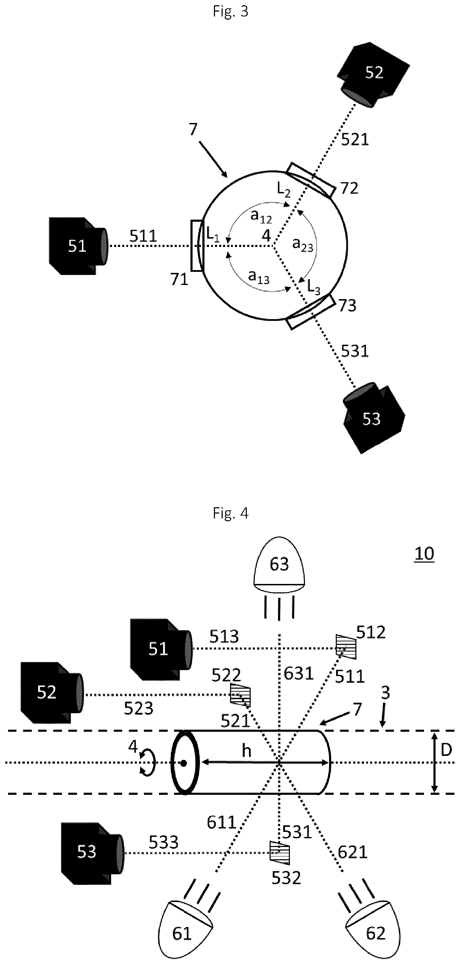

Figure 3 shows a schematic view along the rotation axis (4) of the circular elongated element (3) of a light receiving unit (5) according to an embodiment. According to the embodiment, the light receiving unit (5) comprises a first camera (51), a second camera (52), and a third camera (53). The centerlines of these cameras (511,521,531) hit the cylinder (7) defined by the circular elongated element (3). $L_1$, $L_2$ and $L_3$ are lines defined by the centerlines of the first camera (511), the second camera (521) and the third camera (531), respectively. The angles $a_{34}$, $a_{45}$, $a_{35}$ are the angles in a view along the rotation axis (4) of the circular elongated element (3) between two adjacent lines ($L_1,L_2,L_3$) defined by the centerlines of the first camera (511), the second camera (521) and the third camera (531), respectively. The angles $a_{34}$, $a_{45}$, $a_{35}$ are each about 120°. The cameras are focused on an area including the outer surface of cylinder (71,72,73) facing to the respective camera (51,52,53). Thus, an accurate inspection of the whole outer surface of the circular elongated element is possible.

Figure 4

Figure 4 shows a schematic side view of an apparatus (10) according to an embodiment. Depicted are a light receiving unit (5) comprising three cameras (51,52,53), a light emitting unit (6) comprising three light sources (61,62,63), and three mirrors (512,522,532). Light emitted from the light sources (611,621,631) of the light emitting unit (6) passes the cylinder (7) defined by the circular elongated element (3) and is then reflected by the mirrors (512,522,532). The light reflected by the respective mirrors (513,523,533) then reaches the respective camera (51,52,53) of the light receiving unit (5). The angles ($a_{34}$, $a_{45}$, $a_{35}$; not shown) between two adjacent lines ($L_1,L_2,L_3$; not shown) defined by the centerlines of the first camera (511), the second camera (521) and the third camera (531), respectively, are as described in Figure 3. Furthermore, also the cameras (51,52,53) are focused on an area including the outer surface of cylinder (71,72,73; not shown) facing to the respective camera (51,52,53). The mirrors (512,522,532) are planar totally-reflective mirrors (512,522,532) which are arranged approximately equidistant with regard to the rotation axis (4) of the circular elongated element (3). Each camera (51,52,53) and the associated mirror (512,522,532) are arranged in a line approximately parallel to a line defined by the rotation axis (4) of the circular elongated element (3). Furthermore, each camera (51,52,53) is arranged in a plane defined by the rotation axis (4) of the circular elongated element (3) and the associated mirror (512,522,532). Thus, an accurate inspection of the whole outer surface of the circular elongated element (3) is possible. In addition, due to the mirrors (512,522,532) a more compact arrangement of the light emitting unit (6) and the light receiving unit (5) is possible and consequently, more light sources and more cameras can be arranged around the circular elongated element (3). In addition, if the apparatus (10) is used to inspect circular elongated elements (3) having different diameters (D), an area including the outer surface of cylinder (71,72,73; not shown) facing to the respective camera (51,52,53), can easily be focused by a parallel movement of all cameras in a direction parallel to the rotation axis (4) of the circular elongated element (3).

Figure 5a/b

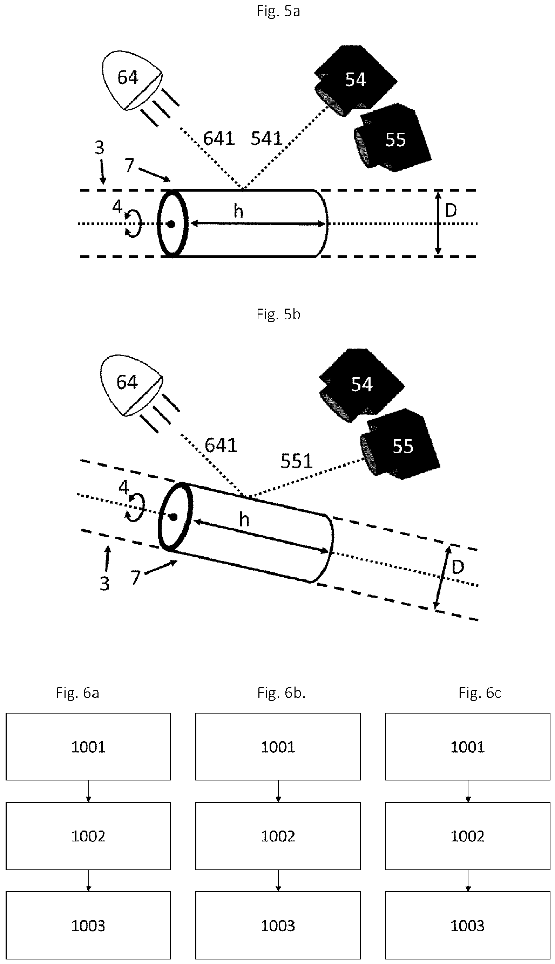

In figures 5a and 5b, schematic side views of a control unit according to an embodiment are shown. The control unit according to an embodiment comprises a light emitting unit (6) comprising a light source (64) and a light receiving unit (5) comprising a first camera (54) and optionally a second camera (55). The light beam emitted by the light source (641) is reflected by the circular elongated element (3), more precisely the lateral surface of the cylinder (7) defined by the circular elongated element (3). If the orientation of the circular elongated element (3) is in a desired orientation (see Figure 4a), e.g. horizontal, the light beam reflected by the circular elongated element (541) reaches the first camera (54). In this case, the light beam reflected by the circular elongated element (541) does not reach the second camera (55).
However, If the orientation of the circular elongated element (3) is not in the desired orientation (see Figure 4b), the light beam reflected by the circular elongated element (541) reaches the second camera (55) but not the first camera (54). Thus, the control unit recognizes whether the rotation axis (4) of the cylinder (7) defined by the circular elongated element (3) changes its orientation from a desired orientation to an undesired orientation. In the desired orientation, i.e. from the determined degree of coaxiality of the circular elongated element (3) to the apparatus (10), it is possible to inspect the circular elongated element (3) more accurately. The rotation axis (4) may cross a plane defined by the light beam emitted by the light source (641) and the light beam reflected by the circular elongated element (541) in any angle. In addition, the orientation of the circular elongated element (3) can be determined by measuring the intensity of the light beam reflected by the circular elongated element (541) reaching one of the cameras (54,55), wherein a set point, e.g. a reference image, may be used to evaluate, whether the circular elongated element (3) is orientated in a desired or undesired orientation. A computer (not shown) can be used to evaluate and safe the data for the respective portion of the circular elongated element (3). The accuracy of the control unit can be adjusted by the distance between the first camera (54) and the second camera (55) and/or the distance along the centerline(s) (541,551) between the first camera (54) and/or the second camera (55) and the circular elongated element (3). The distance between the distance along the centerline(s) (541,551) between the first camera (54) and the second camera (55), and the circular elongated element (3) is for example 50 cm. In addition, if the apparats (10) comprises two or more control units, the orientation of the circular elongated element (3) in two or more dimensions can be determined, e.g. horizontal and vertical. Thus, it is ensured that the control unit can sufficiently determine the orientation of the circular elongated element (3) during the inspection.

Figure 6a/b/c

Figure 6a shows a block diagram of an embodiment of the method. The method serves to inspecting a pharmaceutical cylindrical container. In a first step 1001, the circular elongated element (3) is drawn along the rotation axis (4) of the circular elongated element (3). In a second step 1002, the circular elongated element (3) is illuminated while the circular elongated element (3) is drawn along the rotation axis (4) of the circular elongated element (3). In a third step 1003, a first image is acquired with a first camera (51) and a second image is acquired with a second camera (52) while the circular elongated element (3) is illuminated, wherein the centerline of the first camera (511) and the centerline of the second camera (521) hit the lateral surface of a cylinder (7) defined by the circular elongated element (3), wherein the cylinder (7) has a height h of 10 cm or less.
Figure 6b shows a block diagram of an embodiment of the method. The method serves to inspecting a pharmaceutical cylindrical container. In a first step 1001, defects in a circular elongated element (3) are detected, quantified and classified, preferably with an apparatus (10) according to embodiment described herein. In a second step 1002, the circular elongated element (3) are separated after detection, quantification, and classification of the defects to obtain a separated circular elongated element (3). In a third step 1003, separated circular elongated elements (3a) are sorted out which exhibit a specific amount of defects or a specific size of a defects; and/or are recognized by the control unit as to exhibit a changed orientation during the inspection.
Figure 6c shows a block diagram of an embodiment of the method. In a first step 1001, the circular elongated element is illuminated with a first light beam emitted by a first light source (61) of a light emitting unit (6). In a second step 1002, an image is acquired of at least a part of the light beam emitted by the first light source (61) and reflected by the circular elongated element (3) by the first camera (51) of the light receiving unit (5). In a third step 1003, the image is compared with a set point, e.g. a reference image, to obtain information about the orientation of the circular elongated element (3).

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

Items

1. Apparatus (10) for the inspection of a circular elongated element (3), comprising, preferably wherein the control unit comprises:

a light emitting unit (6) comprising a first light source (61), and
a light receiving unit (5) comprising a first camera (51).

2. Apparatus (10) according to any one of the preceding items,
wherein the light emitting unit (6) comprises a second light source (62).

3. Apparatus (10) according to any one of the preceding items, comprising:
wherein the light receiving unit (5) comprises a second camera (52).

4. Apparatus (10) according to any one of the preceding items, comprising:

a motion unit (2);
wherein the motion unit (2) is configured to move, preferably to continuously move, the circular elongated element (3) relative to at least one camera (51 to 55) of the light receiving unit (5).

5. Apparatus (10) according to any one of the preceding items, wherein the first light source (61) and/or, preferably and, the second light source (62) of the light emitting unit (6) emit(s) a first light beam (611) and/or, preferably and, a second light beam (621) for illuminating the circular elongated element (3).

6. Apparatus (10) according to any one of the preceding items, wherein the light receiving unit (5) is configured such that the centerline of the first camera (511) and the centerline of the second camera (521) hit the lateral surface of a cylinder (7) defined by the circular elongated element (3), wherein the cylinder (7) has a height h of 10 cm or less.

7. Apparatus (10) according to any one of the preceding items, wherein the light receiving unit (5) is configured such that the centerline of the first camera (511) and the centerline of the second camera (521) hit the lateral surface of the circular elongated element (3), preferably hit the lateral surface of a cylinder (7) defined by the circular elongated element (3), wherein the cylinder (7) has a height h of 10 cm or less.

8. Apparatus (10) for the inspection of a circular elongated element (3), preferably according to any one of the preceding items, comprising a control unit which is configured to obtain information about the orientation of the circular elongated element (3).

9. Apparatus (10) for the inspection of a circular elongated element (3), preferably according to any one of the preceding items, comprising a control unit, comprising:

a light emitting unit (6) comprising a first light source (61),
a light receiving unit (5) comprising a first camera (51), and
a computer unit;
wherein the first light source (61) of the light emitting unit (6) emits a first light beam for illuminating the circular elongated element (3);
wherein the first camera (61) of the light receiving unit (5) is configured to acquire an image of at least a part of the light beam emitted by the first light source (61) and reflected by the circular elongated element (3); and
wherein the computer unit is configured to compare at least a part of the image with a set point, preferably a reference image, to obtain information about the orientation of the circular elongated element (3).

10. Apparatus (10), preferably according to any one of the preceding items, comprising a control unit, comprising:

a light emitting unit (6) comprising a first light source (61) and preferably a second light source (62),
a light receiving unit (5) comprising a first camera (51) and a second camera (52), and
a computer unit;
wherein the first light source (61), preferably and the second light source (62), of the light emitting unit (6) emit a first light beam, preferably and a second light beam, for illuminating the circular elongated element (3);
wherein the first camera (61) and the second camera (62) of the light receiving unit (5) are configured to acquire images of at least a part of the light beams emitted by the first light source (61) and reflected by the circular elongated element (3), preferably and/or the second light source and reflected by the circular elongated element (3); and
wherein the computer unit is configured to compare at least a part of the images with set points, preferably reference images, to obtain information about the horizontal and vertical orientation of the circular elongated element (3).

11. Apparatus (10) according to any one of the preceding items,
wherein the cylinder (7) has a height h of 9 cm or less, preferably 8 cm or less, more preferably 7 cm or less, more preferably 6 cm or less, more preferably 5 cm or less, more preferably 4 cm or less, more preferably 3 cm or less, more preferably 2 cm or less, more preferably 1 cm or less, more preferably 0.9 cm or less, more preferably 0.8 cm or less, more preferably 0.7 cm or less, more preferably 0.6 cm or less, more preferably 0.5 cm or less, more preferably 0.4 cm or less, more preferably 0.3 cm or less, more preferably 0.2 cm or less, more preferably 0.1 cm or less, more preferably 0.05 cm or less, more preferably 0.02 cm or less; and/or, preferably and, 0.001 cm or more, preferably 0.01 cm or more.

12. Apparatus (10) according to any one of the preceding items,
wherein the light receiving unit (5) is configured such that the centerline of the first camera (511) and/or, preferably and, the centerline of the second camera (521), more preferably the centerlines of all cameras (511 to 551) of the light receiving unit (5), cross(es) a plane perpendicular to the rotation axis of the circular elongated element (4) in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°,
wherein an angle of 0° means that the centerline of the camera(s) (511,521,531,541,551) is parallel to a plane perpendicular to the rotation axis of the circular elongated element (4).

13. Apparatus (10) according to any one of the preceding items,
wherein the light receiving unit (5) is configured such that the centerline of the first camera (511) and/or, preferably and, the centerline of the second camera (521), more preferably the centerlines of all cameras (511 to 551) of the light receiving unit (5), cross(es) a plane perpendicular to the rotation axis of the circular elongated element (4) in an angle of 0° or more, preferably 1° or more, more preferably 2° or more, more preferably 3° or more, more preferably 4° or more, more preferably 5° or more, more preferably 10° or more, more preferably 20° or more,
wherein an angle of 0° means that the centerline of the camera(s) (511,521,531,541,551) is parallel to a plane perpendicular to the rotation axis of the circular elongated element (4).

14. Apparatus (10) according to any one of the preceding items,
wherein the light receiving unit (5) comprises 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras.

15. Apparatus (10) according to any one of the preceding items,
wherein the light receiving unit (5) comprises 1024 or less, preferably 512 or less, more preferably 256 or less, more preferably 128 or less, more preferably 64 or less, more preferably 48 or less, more preferably 32 or less, more preferably 24 or less, more preferably 12 or less, cameras.

16. Apparatus (10) according to any one of the preceding items,
wherein the light receiving unit (5) is configured such that the centerlines of the 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras (511 to 551) hit the lateral surface of the cylinder (7) defined by the circular elongated element (3).

17. Apparatus (10) according to any one of the preceding items,
wherein the light receiving unit (5) is configured such that the centerlines of the 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras (511 to 551) cross a plane perpendicular to the rotation axis of the circular elongated element (4) in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°,
wherein an angle of 0° means that the centerline of the camera(s) (511,521,531,541,551) is parallel to a plane perpendicular to the rotation axis of the circular elongated element (4); and/or, preferably and,
wherein the light receiving unit (5) is configured such that the centerlines of the 3 or more, preferably 4 or more, more preferably 5 or more, more preferably 6 or more, more preferably 10 or more, more preferably 12 or more, more preferably 18 or more, more preferably 24 or more, more preferably 32 or more, more preferably 48 or more, more preferably 64 or more, more preferably 128 or more, more preferably 256 or more, cameras (511 to 551) cross a plane perpendicular to the rotation axis of the circular elongated element (4) in an angle of 0° or more, preferably 1° or more, more preferably 2° or more, more preferably 3° or more, more preferably 4° or more, more preferably 5° or more, more preferably 10° or more, more preferably 20° or more,
wherein an angle of 0° means that the centerline of the camera(s) (511,521,531,541,551) is parallel to a plane perpendicular to the rotation axis of the circular elongated element (4).

18. Apparatus (10) according to any one of the preceding items,
wherein the first camera (51) and/or, preferably and, the second camera (52), more preferably all cameras of the light receiving unit (5), is/are focused on an area including the outer surface or wall of the circular elongated element (3), and/or
wherein the outer surface or wall of the circular elongated element (3), facing to the first camera (51) and/or, preferably and, the second camera (52), is at least partially within the area of depth of focus of the first camera (51) and/or, preferably and, the second camera (52), respectively; and/or
wherein the outer surface or wall of the circular elongated element (3), facing to a respective camera of the light receiving unit (5), is at least partially within the area of depth of focus of the respective camera of the light receiving unit (5).

19. Apparatus (10) according to any one of the preceding items,
wherein the first camera (51) and/or, preferably and, the second camera (52), more preferably all cameras of the light receiving unit (5), exhibit(s) 1 pixel or more, preferably 1 kilopixel or more, preferably 1 megapixel or more, more preferably 3 megapixel or more, more preferably 5 megapixel or more, more preferably 10 megapixel or more, more preferably 100 megapixel or more; and/or, preferably and, 1000 megapixel or less, preferably 200 megapixel or less, more preferably 150 megapixel or less.

20. Apparatus (10) according to any one of the preceding items,
wherein the first camera (51) and/or, preferably and, the second camera (52), more preferably all cameras of the light receiving unit (5), exhibit(s) a shutter speed of 1 s or less, preferably 1 ms or less, more preferably 100 $\mu$s or less, more preferably 20 $\mu$s or less, more preferably 1 $\mu$s or less; and/or, preferably and, 0.01 $\mu$s or more.

21. Apparatus (10) according to any one of the preceding items,
wherein the first camera (51) and/or, preferably and, the second camera (52), more preferably all cameras of the light receiving unit (5), exhibit(s) a pixel size of 1 pm$^2$ to 1mm$^2$, preferably 10 nm$^2$ to 1 mm$^2$, more preferably 20 nm$^2$ to 0.8 mm$^2$, more preferably 50 nm$^2$ to 0.6 mm$^2$, preferably 80 nm$^2$ to 0.5 mm$^2$.

22. Apparatus (10) according to any one of the preceding items,
wherein the first camera (51) and/or, preferably and, the second camera (52), more preferably all cameras of the light receiving unit (5), is/are configured to acquire 1 images per second or more, preferably 100 images per second or more, more preferably 5000 images per second or more, more preferably 10000 images per second or more, more preferably 25000 images per second or more; and/or, preferably and, $1*10^6$ images per second or less, preferably $5*10^5$ images per second or less, more preferably $3*10^5$ images per second or less, more preferably

$1*10^5$ images per second or less, more preferably $5*10^4$ images per second or less, more preferably $1*10^4$ images per second or less, more preferably $1*10^3$ images per second or less.

23. Apparatus (10) according to any one of the preceding items,
wherein the angle between a line defined by the centerline of the first camera (511) and a line defined by the centerline of the second camera (521) in a view along the rotation axis of circular elongated element (4) is 1° or more, preferably 5° or more, more preferably 10° or more, more preferably 30° or more, more preferably 45° or more, more preferably 60° or more, more preferably 90° or more, more preferably 120° or more, more preferably 150° or more, more preferably 160° or more; and/or, preferably and, 180 or less, preferably less than 180°, more preferably 150° or less, more preferably 120° or less, more preferably 90° or less, more preferably 60° or less, more preferably 30° or less.

24. Apparatus (10) according to any one of the preceding items,
wherein between the first camera (51) and/or, preferably and, the second camera (52), more preferably between all cameras of the light receiving unit (5), and the circular elongated element (3) is/are (a) mirror(s) (512,522,532) reflecting light from the circular elongated element (3) to the first camera (51), preferably to the first and the second camera (52), respectively, more preferably to the respective camera of the light receiving unit (5).

25. Apparatus (10) according to any one of the preceding items,
wherein the mirror(s) (512,522,532) is/are (a) planar, convex or concave; totally-reflective mirror(s), semi-transparent mirror(s), one-way mirror(s), diffractive optical element(s) or beam splitter(s), preferably (a) planar totally-reflective mirror(s).

26. Apparatus (10) according to any one of the preceding items,
wherein the first camera (51) and/or, preferably and, the second camera (52), more preferably all cameras of the light receiving unit (5); and/or, preferably and,
the first light source (61) and/or, preferably and, the second light source (62), more preferably all light sources (61 to 64) of the light emitting unit (6); and/or, preferably and, the mirrors (512,522,532) are arranged equidistant ± 5 cm, preferably equidistant, with regard to the rotation axis of the circular elongated element (4).

27. Apparatus (10) according to any one of the preceding items,
wherein the first light source (61) and/or, preferably and, the second light source (62), more preferably all light sources (61 to 64) of the light emitting unit (6), is/are bright field light sources with regard to the first camera (51), preferably to the first and the second camera (52), respectively, more preferably to the respective camera of the light receiving unit (5).

28. Apparatus (10) according to any one of the preceding items,
wherein the first light source (61) and/or, preferably and, the second light source (62), more preferably all light sources (61 to 64) of the light emitting unit (6), is/are dark field light sources with regard to the first camera (51), preferably to the first and the second camera (52), respectively, more preferably to the respective camera of the light receiving unit (5).

29. Apparatus (10) according to any one of the preceding items,
wherein the cameras (51 to 55) of the light receiving unit (5) and/or, preferably and, the light sources (61 to 64) of the light emitting unit (6) are arranged so that the entire circular elongated element (3) can be inspected independent of the rotation speed of the circular elongated element (3) around the rotation axis of the circular elongated element (4).

30. Apparatus (10) according to any one of the preceding items,
wherein at least n cameras of the light receiving unit (5) are arranged such that the following equation is fulfilled:

$$a * n = 360° \pm x,$$

wherein n is the number of cameras (51,52,51) of the light receiving unit (5) taken into account,
wherein n is 2, preferably 3, more preferably 6, more preferably 12,
a is any angle ($a_{12}, a_{23}, a_{13}$) in [°] in a view along the rotation axis of the circular elongated element (4) between any two adjacent lines (L1,L2,L3) defined by the centerlines of the n cameras (511,521,531) when they hit the lateral surface of the cylinder(7), wherein x is 100° or less, preferably 50° or less, more preferably 30° or less, more preferably 10° or less.

31. Apparatus (10) according to any one of the preceding items,
wherein at least one of the following features is/are fulfilled:

i) wherein at least one camera of the light receiving unit is configured to acquire an image representing only infrared light, i.e. light having a wavelength of 780 to 1 mm; preferably only NIR light, i.e. light having a wavelength of 780 nm to 2.5 $\mu$m; and/or

ii) wherein at least one camera of the light receiving unit is configured to acquire an image representing only visible light, i.e. light having a wavelength of 400 to 800 nm; and/or

iii) wherein at least one camera of the light receiving unit is configured to acquire an image representing only UV light, i.e. light having a wavelength of 100 to 400 nm, preferably only UV-C (100 nm to 280 nm), UV-B (280 nm to 315 nm) and/or UV-A light (315 nm to 380 nm); and/or

iv) wherein at least one camera of the light receiving unit is configured to acquire an image representing only infrared light, i.e. light having a wavelength of 800 nm to 1 mm; and/or

v) wherein at least one camera of the light receiving unit is configured to acquire an image representing only blue light, i.e. light having a wavelength of 400 to 450 nm; and/or

vi) wherein at least one camera of the light receiving unit is configured to acquire an image representing only green light, i.e. light having a wavelength 450 to 530 nm; and/or

vii) wherein at least one camera of the light receiving unit is configured to acquire an image representing only yellow light, i.e. light having a wavelength of 530 to 580 nm; and/or

viii) wherein at least one camera of the light receiving unit is configured to acquire an image representing only red light, i.e. light having a wavelength of 580 to 800 nm; and/or

ix) wherein at least one camera of the light receiving unit is configured to acquire an image representing only linear polarized light; and/or

x) wherein at least one camera of the light receiving unit is configured to acquire an image representing only elliptical polarized light, preferably circular polarized light; and/or

xi) wherein at least one camera, preferably the first camera, of the light receiving unit is configured to acquire an image representing a first wavelength range and a further camera, preferably the second camera, of the light receiving unit is configured to acquire an image representing a second wavelength range and the first wavelength range and the second wavelength range do not overlap; and/or

xii) wherein at least one camera, preferably the first camera, of the light receiving unit is configured to acquire an image representing one kind of polarization of the light and a further camera, preferably the second camera, of the light receiving unit is configured to acquire an image representing a second kind of polarization of the light and the first kind of polarization of the light and the second kind of polarization of the light are not the same, wherein the kind of polarization is selected from linear, circular, and elliptical polarized light; and/or

xiii) wherein the light receiving unit, preferably one camera of the light receiving unit, is configured to distinguish light having different wavelength, preferably to distinguish between green, red, blue and yellow light; and/or

xiv) wherein at least one camera of the light receiving unit, preferably the first camera, can distinguish whether the camera receives light emitted from the first and/or the second light source; and/or

xv) wherein light emitted by the first light source hits the first camera and light emitted by the second light source hits the second camera; and/or

xvi) wherein at least one camera of the light receiving unit is configured to acquire at least two or more, preferably three or more, more preferably four or more images, each considering different wavelength ranges and/or different kinds of polarizations, wherein the kinds of polarization are selected from linear, circular, and elliptical polarized light.

32. Apparatus (10) according to any one of the preceding items,
wherein the light receiving unit (5) is configured such that at least one camera of the light receiving unit (5), preferably the first camera (51) and/or, preferably and, the second camera (52), preferably all cameras of the light receiving unit (5) is/are configured to acquire, preferably continuously acquire, images of the circular elongated element (3) while the motion unit (2) continuously moves the circular elongated element (3) relative to at least one camera of the light receiving unit (5).

33. Apparatus (10) according to any one of the preceding items,
wherein the motion unit (2) is a drawing unit which is configured to draw, preferably to continuously draw, the circular elongated element (3) along the rotation axis of the circular elongated element (4).

34. Apparatus (10) according to any one of the preceding items,
wherein the drawing unit simultaneously rotates the circular elongated element (3) while moving the circular elongated element (3) relative to at least one camera of the light receiving unit (5).

35. Apparatus (10) according to any one of the preceding items,
wherein the motion unit (2) is configured to move, preferably to continuously move, the circular elongated element (3) relative to at least one camera of the light receiving unit (5) with a speed of 0.001 m/s to 20 m/s, preferably 0.01 m/s to 15 m/s, more preferably 0.02 m/s to 10 m/s, more preferably 0.05 m/s to 8 m/s, more preferably 0.1 m/s to 7 m/s, more preferably 0.2 m/s to 5 m/s.

36. Apparatus (10) according to any one of the preceding items,
wherein the motion unit (2) is configured to rotate the circular elongated element (3) with a speed of 0.06 rpm to 600 rpm, preferably 0.6 rpm to 300 rpm, more preferably 6 rpm to 240 rpm, more preferably 12 rpm to 180 rpm, more preferably 60 rpm to 120 rpm.

37. Apparatus (10) according to any one of the preceding items,
wherein the motion unit (2) comprises a coated or uncoated, preferably uncoated, drum, chain, roll (21/22) or conveyer belt, preferably an uncoated conveyer belt.

38. Apparatus (10) according to any one of the preceding items,
wherein the motion unit (2) is configured to convey a circular elongated element (3) having an outer diameter of 0.01 cm to 50 cm, preferably 1 cm to 10 cm, more preferably 2 cm to 6 cm.

39. Apparatus (10) according to any one of the preceding items,
wherein the motion unit (2) is configured such that the circular elongated element (3) vibrates in the area where the image(s) is/are acquired by the first and the second camera (51/52) of the light receiving unit (5) with an amplitude of 1.0 mm or less, preferably 0.5 mm or less, most preferably about 0.01 mm, more preferably about 0.001 mm, and/or, preferably and, a frequency of 200 Hz or less, preferably 100 Hz or less, more preferably about 0 Hz.

40. Apparatus (10) according to any one of the preceding items,
wherein the motion unit (2) is configured to move, preferably to continuously move, the circular elongated element (3) contactless in the area where the images are acquired by the first camera (51) and/or, preferably and, the second camera (52), more preferably all cameras of the light receiving unit (5).

41. Apparatus (10) according to any one of the preceding items,
wherein the light emitting unit (6) comprises a second light source (62) emitting a second light beam (622).

42. Apparatus (10) according to any one of the preceding items,
wherein the light emitting unit (6) comprises 2 or more, preferably 6 or more, more preferably 12 or more, more preferably 24 or more, more preferably 48 or more; and/or, preferably and, $10^7$ or less, preferably 800 or less, more preferably 400 or less, more preferably 64 or less, light sources (61 to 64)).

43. Apparatus (10) according to any one of the preceding items,
wherein the first light beam and/or the second light beam are deflected by a mirror (512,522,532) before it/they hit(s) the circular elongated element (3).

44. Apparatus (10) according to any one of the preceding items,
wherein the mirror(s) (512,522,532) is/are (a) planar, convex or concave; totally-reflective mirror(s), semi-transparent mirror(s), one-way mirror(s), diffractive optical element(s) or beam splitter(s), preferably (a) planar totally-reflective mirror(s).

45. Apparatus (10) according to any one of the preceding items,
wherein the first and/or the second light source (61,62) comprise(s) a light emitting plane, wherein the light emitting plane exhibits a size in the range of 1 cm$^2$ to 5 m$^2$, preferably 1.5 cm$^2$ to 1000 cm$^2$, more preferably 2 cm$^2$ to 100 cm$^2$.

46. Apparatus (10) according to any one of the preceding items,
wherein the first and/or the second light source (61,62) comprise(s) a light emitting plane, wherein the color temperature of each of the light emitting plane is between 500 K and 18000 K, preferably 1000 K to 10000 K, more preferably 4000 K to 7000 K.

47. Apparatus (10) according to any one of the preceding items,
wherein the first and/or the second light source (61,62) comprise(s) a light emitting plane, wherein the light emitting plane emits red, green, blue, yellow, UV, UV-A, UV-B, UV-C, IR, IR-A, IR-B or IR-C light.

48. Apparatus (10) according to any one of the preceding items,
wherein the light emitting unit (6) comprises at least one arrangement emitting linearly, elliptically or circularly polarized light.

49. Apparatus (10) according to any one of the preceding items,
wherein the distance between each of the light emitting planes and the rotation axis of the circular elongated element (4) is between 5 to 100 cm, preferably 8 to 40 cm, more preferably 10 to 30 cm.

50. Apparatus (10) according to any one of the preceding items,
wherein at least n light sources (61 to 64) of the light emitting unit (6) are arranged such that the following equation is fulfilled:

$$a * n = 360° \pm x,$$

wherein n is the number of light sources (61 to 64) of the light emitting unit (6) taken into account,
wherein n is 2, preferably 3, more preferably 6, more preferably 12, more preferably 24, a is any angle in [°] in a view along the rotation axis of the circular elongated element (4) between any two adjacent lines defined by the centerlines of the n light sources (611,621,631,641) when they hit the lateral surface of the circular elongated element (3), wherein x is 100° or less, preferably 50° or less, more preferably 30° or less, more preferably 10° or less.

51. Apparatus (10) according to any one of the preceding items,
wherein the light emitting unit (6) is configured such that the centerline of the first light source (611) and/or, preferably and, the centerline of the second light source (621), more preferably the centerline of all light sources (611,621,631,641) of the light emitting unit (6), cross(es) a plane perpendicular to the rotation axis of the circular elongated element (4) in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°,
wherein an angle of 0° means that the centerline of the light sources (611,621,631,641) is parallel to a plane perpendicular to the rotation axis of the circular elongated element (4).

52. Apparatus (10) according to any one of the preceding items,
wherein the light emitting unit (6) is configured such that the centerline of the first light source (611) and/or, preferably and, the centerline of the second light source (621), more preferably the centerline of all light sources (611,621,631,641) of the light emitting unit (6), cross(es) a plane perpendicular to the rotation axis of the circular elongated element (4) in an angle of 0° or more, preferably 1° or more, more preferably 2° or more, more preferably 3° or more, more preferably 4° or more, more preferably 5° or more, more preferably 10° or more, more preferably 15° or more, more preferably 20° or more,
wherein an angle of 0° means that the centerline of the light sources (611,621,631,641) is parallel to a plane perpendicular to the rotation axis of the circular elongated element (4).

53. Apparatus (10) according to any one of the preceding items,
wherein the light emitting unit (6) is configured such that the centerline of the first light source (611) and/or, preferably and, the centerline of the second light source (621), more preferably the centerline of all light sources (611,621,631,641) of the light emitting unit (6), hit(s) the lateral surface of the cylinder (7) defined by the circular elongated element (3).

54. Apparatus (10) according to any one of the preceding items,
wherein the angle between the a line defined by the centerline of one light source (611,621,631,641), preferably the centerline of the first light source (611), and a line defined by the centerline of another light source (611,621,631,641), preferably the centerline of the second light source (621), of the light emitting unit (6) in a view along the rotation axis of the circular elongated element (4) is 1° or more and 270° or less, preferably 20° to 150°, more preferably 30° to 90°, more preferably 45° to 60°.

55. Apparatus (10) for the inspection of a circular elongated element (3), preferably according to any one of the preceding claims, comprising a control unit which is configured to obtain, preferably continuously obtain, information about the orientation of the circular elongated element (3).

56. Apparatus (10) for the inspection of a circular elongated element (3), preferably according to any one of the preceding claims, comprises a control unit which is configured to recognize whetherthe rotation axis of the cylinder (4) defined by the circular elongated element (3) changes its orientation.

57. Apparatus (10) for the inspection of a circular elongated element (3), preferably according to any one of the preceding claims, comprising:

a light emitting unit (6) comprising a first light source (61),
a light receiving unit (5) comprising a first camera (51), and
a computer unit;
wherein the first light source (61) of the light emitting unit (6) emits a first light beam for illuminating the circular elongated element (3);
wherein the first camera (61) of the light receiving unit (5) is configured to acquire an image of at least a part of the light beam emitted by the first light source (61) and reflected by the circular elongated element (3); and
wherein the computer unit is configured to compare at least a part of the image with a set point, preferably a reference image, to obtain information about the orientation of the circular elongated element (3).

58. Apparatus according to any one of the preceding claims,
wherein the light emitting unit (6) further comprises a second light source (62), and preferably wherein the light receiving unit (5) further comprises a second camera (52);
wherein the second light source (62) of the light emitting unit (6) emits a second light beam for illuminating the circular elongated element (3);
wherein the first camera (51), preferably and/or the second camera (52), of the light receiving unit (5) is/are configured to acquire an image of at least a part of the light beam emitted by the second light source (62) and reflected by the circular elongated element (3); and
wherein the computer unit is configured to compare at least a part of the images with a set point, preferably a reference image, to obtain information about the horizontal and vertical orientation of the circular elongated element during the inspection.

59. Apparatus according to any one of the preceding claims,
wherein the apparatus (10) comprises a separating unit (105) separating the circular elongated element (3) to obtain separated circular elongated elements (3); and/or
wherein the apparatus (10) comprises a sorting unit (106) sorting out separated circular elongated elements (3a) recognized by the control unit as to exhibit an orientation, preferably a horizontal and/or vertical orientation, not within a predetermined value during the inspection.

60. Apparatus according to any one of the preceding claims,
wherein exhibit an orientation, preferably a horizontal and/or vertical orientation, not within a predetermined value during the inspection is a state wherein the angle between the centerline of the first camera (511), preferably and/or the centerline of the second camera, and a plane perpendicular to the rotation axis of the circular elongated element (4) differs more than 0.01° or more, preferably 0.05° or more, more preferably 0.1° or more, more preferably 1° or more, more preferably 2° or more, more preferably 3° or more, more preferably 4° or more, more preferably 5° or more, more preferably 10° or more, from a predetermined value.

61. Apparatus according to any one of the preceding claims, comprising a motion unit (2), wherein the motion unit (2) is configured to move, preferably to continuously move, the circular elongated element (3) relative to at least one camera of the light receiving unit (51 to 55).

62. Method according to any one of claims 7 to 10,
wherein the angle between the a line defined by the centerline of the first light source (611) and a line defined by the centerline of the second light source (621) of the light emitting unit (6) in a view along the rotation axis of the circular elongated element (4) is 1° or more and 270° or less, preferably 20° to 150°, more preferably 30° to 90°, more preferably 45° to 60°.

63. Apparatus (10) according to any one of the preceding items,
wherein the light beam is reflected on the lateral surface of a cylinder (7) defined by the circular elongated element (3).

64. Apparatus (10) according to any one of the preceding items,
wherein a change of the intensity of the light beam is a decrease of the intensity of the light beam.

65. Apparatus (10) according to any one of the preceding items,
wherein a change of the intensity of the light beam is an increase of the intensity of the light beam.

66. Apparatus (10) according to any one of the preceding items,
wherein the apparatus (10) comprises a first control unit and a second control unit, which are configured to recognize whether the rotation axis of the cylinder (4) defined by the circular elongated element (3) changes its orientation,
wherein the first control unit is configured to recognize whether the rotation axis of the cylinder (4) defined by the circular elongated element (3) changes at least partly its horizontal orientation,
wherein the second control unit is configured to recognize whether the rotation axis of the cylinder (4) defined by the circular elongated element (3) changes at least partly its vertical orientation.

67. Apparatus (10) according to any one of the preceding items,
wherein the apparatus (10) comprises a first control unit and/or, preferably and, a second control unit, which is/are configured to recognize whether the rotation axis of the cylinder (4) defined by the circular elongated element (3) changes its orientation,
wherein the first camera (51) and the first light source (61) are part of the first control unit and/or, preferably and, the second camera (52) and the second light source (62) are part of the second control unit.

68. Apparatus (10) according to any one of the preceding items,
wherein the apparatus (10) comprises a separating unit (105), preferably after the motion unit (2), separating the circular elongated element (3), preferably cutting to length, to obtain separated circular elongated elements (3).

69. Apparatus (10) according to any one of the preceding items,
wherein the separating is realized manually, semi-automated or automated.

70. Apparatus (10) according to any one of the preceding items,
wherein the apparatus (10) comprises a sorting unit (106), preferably after the separating unit (105), sorting out separated circular elongated elements (3a):
exhibiting a specific amount of defects or a specific size of a defects.

71. Apparatus (10) according to any one of the preceding items,
wherein the apparatus (10) comprises a sorting unit (106), preferably after the separating unit (105), sorting out separated circular elongated elements (3a):
recognized by the control unit as to exhibit a changed orientation during the inspection.

72. System comprising:

an apparatus (10) according to any one of the preceding items, and
a production unit to produce an endless circular elongated element (3),
wherein the distance between the apparatus (10) according to any one of the preceding items and the production unit is 100 m or less, preferably 50 m or less, more preferably 30 m or less.

73. Method for the inspection of a circular elongated element (3), preferably using an apparatus (10) or system according to any one of preceding items, comprising the following steps:

- drawing a circular elongated element (3) along the rotation axis (4) of the circular elongated element (3),
- illuminating the circular elongated element (3) while the circular elongated element (3) is drawn along the rotation axis (4) of the circular elongated element (3), and
- acquiring a first image with a first camera (51) and a second image with a second camera (52) while the circular elongated element (3) is illuminated,
wherein the centerline of the first camera (511) and the centerline of the second camera (521) hit the lateral surface of a cylinder (7) defined by the circular elongated element (3),
wherein the cylinder (7) has a height h of 10 cm or less.

74. Method, preferably according to any one of the preceding items, and/or preferably using an apparatus (10) or system according to any one of preceding items, comprising the following steps:

- detecting, quantifying, and classifying defects in the circular elongated element (3), preferably with an apparatus (10) according to any one of the preceding items;
- separating the circular elongated element (3) after detection, quantification, and classification of the defects to obtain a separated circular elongated element (3); and
- sorting out separated circular elongated elements (3a):

    i) exhibiting a specific amount of defects or a specific size of (a) defect(s); and/or
    ii) exhibiting a specific depth and/or specific class of (a) defect(s) and/or a feature set defined by measurable form or texture features from image processing; and/or
    iii) recognized by the control unit as to exhibit a changed orientation during the inspection.

75. Method according to any one of the preceding items,
wherein the time between the solidification of the circular elongated element (3), i.e. the point at which the material (glass) of the circular elongated element (3) reaches a temperature below its (glass) transition temperature, and the inspection by the apparatus (10) according to any one of the preceding items is 10 minutes or less, preferably 1 minute or less, more preferably 30 seconds or less, more preferably 10 seconds or less.

76. Method, preferably according to any one of the preceding items, and/or preferably using an apparatus (10) or system according to any one of preceding items, comprising the following steps:

- illuminating the circular elongated element with a first light beam emitted by a first light source (61) of a light emitting unit (6);
- acquiring an image of at least a part of the light beam emitted by the first light source (61) and reflected by the circular elongated element (3) by the first camera (51) of the light receiving unit (5); and
- comparing the image with a set point, preferably a reference image, to obtain information about the orientation of the circular elongated element.

77. Method according to any one of the preceding items,

- illuminating the circular elongated element with a second light beam emitted by a second light source (62) of a light emitting unit (6);
- acquiring an image of at least a part of the light beam emitted by the second light source (62) and reflected by the circular elongated element (3) by the first camera (51), preferably and/or the second camera (52), of the light receiving unit (5); and
- comparing the images with a set point, preferably a reference image, to obtain information about the horizontal and vertical orientation of the circular elongated element.

78. Method according to any one of the preceding items,
wherein the comparing is carried out by a computer unit and comprises the following steps:

- receiving (an) image(s) from the first camera (51), preferably and the second camera (52), of the light receiving unit (5);
- comparing, preferably the intensity of, at least a part of the image(s) with a set point, preferably a reference image, to obtain information about the orientation, preferably the horizontal and vertical orientation, of the circular elongated element (3).

79. Method according to any one of the preceding items, further comprising the step of:

- separating the circular elongated element (3) to obtain separated circular elongated elements (3); and/or
- sorting out separated circular elongated elements (3a) recognized by the control unit as to exhibit an orientation, preferably a horizontal and/or vertical orientation, not within a predetermined value during the inspection.

80. Bundle of separated circular elongated elements (3b) comprising 5 or more separated circular elongated elements (3a) being inspected by an apparatus (10) according to any one of the preceding items, and/or a method according to any one of the preceding items, and/or a system according to any one of the preceding items.

81. Bundle of separated circular elongated elements (3b) comprising 5 or more separated circular elongated elements (3a), preferably according to any one of the preceding items, wherein the properties of defects, preferably air bubbles, of the separated circular elongated elements (3a) are obtainable by an apparatus (10) according to any one of the preceding items, and/or a method according to any one of the preceding items, and/or a system according to any one of the preceding items.

82. Bundle of separated circular elongated elements (3b), preferably according to any one of the preceding items, comprising 5 or more separated circular elongated elements (3a);
wherein all separated circular elongated elements (3a) exhibits no open and/or, preferably and, closed air bubble having a length of 2000 μm or more, and/or
wherein all separated circular elongated elements (3a) exhibits no open and/or, preferably and, closed air bubble having a width of 100 μm or more.

83. Bundle of separated circular elongated elements (3b), preferably according to any one of the preceding items, wherein all separated circular elongated elements exhibits no open and/or, preferably and, closed air bubble having a length of 2000 μm or more, preferably 1000 μm or more, more preferably 500 μm or more, more preferably 250 μm or more, more preferably 100 μm or more, most preferably 50 μm or more, more preferably 30 μm or more.

84. Bundle of separated circular elongated elements (3b), preferably according to any one of the preceding items, wherein all separated circular elongated elements exhibits no open and/or, preferably and, closed air bubble having a width of 100 μm or more, preferably 50 μm or more, more preferably 30 μm or more, more preferably 10 μm or more, more preferably 5 μm or more, more preferably 3 μm or more.

85. Bundle of separated circular elongated elements (3b), preferably according to any one of the preceding items, comprising 5 or more, preferably 5 to 5000, more preferably 10 to 1000, more preferably 25 to 500, more preferably 30 to 300, most preferably 60 to 250 separated circular elongated elements.

86. Use of a separated circular elongated element (3a) being inspected by an apparatus (10) according to any one of the preceding items, and/or a method according to any one of the preceding items, and/or a system according to any one of the preceding items; and/or a bundle according to any one of the preceding claims, for the production of a pharmaceutical packaging or a technical glass.

87. Use of a separated circular elongated element (3a) being obtainable by an apparatus (10) according to any one of the preceding items, and/or a method according to any one of the preceding items, and/or a system according to any one of the preceding items; and/or a bundle according to any one of the preceding claims, for the production of a pharmaceutical packaging or a technical glass.

**Claims**

1. Apparatus (10) for the inspection of a circular elongated element (3), comprising:

   a motion unit (2);
   a light emitting unit (6) comprising a first light source (61) and preferably a second light source (62); and
   a light receiving unit (5) comprising a first camera (51) and a second camera (52);
   wherein the motion unit (2) is configured to move, preferably to continuously move, the circular elongated element (3) relative to at least one camera of the light receiving unit (51 to 55);
   wherein the first light source (61) of the light emitting unit (6) emits a first light beam (611) for illuminating the circular elongated element (3); and
   wherein the light receiving unit (5) is configured such that the centerline of the first camera (511) and the centerline of the second camera (521) hit the lateral surface of a cylinder (7) defined by the circular elongated element (3), wherein the cylinder (7) has a height h of 10 cm or less.

2. Apparatus (10) according to claim 1, wherein the cylinder (7) has a height h of 9 cm or less, preferably 8 cm or less, more preferably 7 cm or less, more preferably 6 cm or less, more preferably 5 cm or less, more preferably 4 cm or less, more preferably 3 cm or less, more preferably 2 cm or less, more preferably 1 cm or less, more preferably 0.9 cm or less, more preferably 0.8 cm or less, more preferably 0.7 cm or less, more preferably 0.6 cm or less, more preferably 0.5 cm or less, more preferably 0.4 cm or less, more preferably 0.3 cm or less, more preferably 0.2 cm or less, more preferably 0.1 cm or less, more preferably 0.05 cm or less, more preferably 0.02 cm or less; and/or, preferably and, 0.001 cm or more, preferably 0.01 cm or more.

3. Apparatus (10) according to claim 1 or 2,
   wherein the light receiving unit (5) is configured such that the centerline of the first camera (511) and/or, preferably and, the centerline of the second camera (521), more preferably the centerlines of all cameras (511,521,531,541,551) of the light receiving unit (5), cross(es) a plane perpendicular to the rotation axis of the circular elongated element (4) in an angle of 60° or less, preferably 30° or less, more preferably 20° or less, more preferably 15° or less, more preferably 10° or less, more preferably 8° or less, more preferably 5° or less, more preferably 3° or less, more preferably 2° or less, more preferably 1° or less, more preferably is about 0°,
   wherein an angle of 0° means that the centerline of the camera(s) (511,521,531,541,551) is parallel to a plane perpendicular to the rotation axis of the circular elongated element (3).

4. Apparatus (10) according to any one of the preceding claims,
   wherein the first camera (51) and/or, preferably and, the second camera (52), more preferably all cameras of the light receiving unit (5), is/are focused on an area including the outer surface or wall of the circular elongated element (3), and/or
   wherein the outer surface or wall of the circular elongated element (3), facing to the first camera (51) and/or, preferably and, the second camera (52), is at least partially within the area of depth of focus of the first camera (51) and/or, preferably and, the second camera (52), respectively; and/or
   wherein the outer surface or wall of the circular elongated element (3), facing to a respective camera of the light receiving unit (5), is at least partially within the area of depth of focus of the respective camera of the light receiving unit (5).

5. Apparatus (10) according to any one of the preceding claims,
   wherein the angle between a line defined by the centerline of the first camera (511) and a line defined by the centerline of the second camera (521) in a view along the rotation axis of circular elongated element (3) is 1° or more, preferably 5° or more, more preferably 10° or more, more preferably 30° or more, more preferably 45° or more, more preferably 60° or more, more preferably 90° or more, more preferably 120° or more, more preferably 150° or more, more preferably 160° or more; and/or, preferably and, 180 or less, preferably less than 180°, more preferably 150° or less, more preferably 120° or less, more preferably 90° or less, more preferably 60° or less, more preferably 30° or less.

6. Apparatus (10) according to any one of the preceding claims,
   wherein at least n cameras of the light receiving unit (5) are arranged such that the following equation is fulfilled:

$$a * n = 360° \pm x,$$

   wherein n is the number of cameras (51,52,51) of the light receiving unit (5) taken into account,
   wherein n is 2, preferably 3, more preferably 6, more preferably 12,
   a is any angle ($a_{12}, a_{23}, a_{13}$) in [°] in a view along the rotation axis of the circular elongated element (4) between any two adjacent lines (L1,L2,L3) defined by the centerlines of the n cameras (511,521,531) when they hit the lateral surface of the cylinder(7),
   wherein x is 100° or less, preferably 50° or less, more preferably 30° or less, more preferably 10° or less.

7. Apparatus (10) according to any one of the preceding claims,
   wherein the light receiving unit (5) is configured such that at least one camera of the light receiving unit (5), preferably the first camera (51) and/or, preferably and, the second camera (52), preferably all cameras of the light receiving unit (5) is/are configured to acquire, preferably continuously acquire, images of the circular elongated element (3) while the motion unit (2) continuously moves the circular elongated element (3) relative to at least one camera of the light receiving unit (5).

**8.** Apparatus (10) according to any one of the preceding claims,
wherein the motion unit (2) is a drawing unit which is configured to draw, preferably to continuously draw, the circular elongated element (3) along the rotation axis of the circular elongated element (3).

**9.** Apparatus (10) according to any one of the preceding claims,
wherein at least n light sources (61 to 64) of the light emitting unit (6) are arranged such that the following equation is fulfilled:

$$a * n = 360° \pm x,$$

wherein n is the number of light sources (61 to 64) of the light emitting unit (6) taken into account,
wherein n is 2, preferably 3, more preferably 6, more preferably 12, more preferably 24, a is any angle in [°] in a view along the rotation axis (4) of the circular elongated element (3) between any two adjacent lines defined by the centerlines of the n light sources (611,621,631,641) when they hit the lateral surface of the circular elongated element (3), wherein x is 100° or less, preferably 50° or less, more preferably 30° or less, more preferably 10° or less.

**10.** Method for the inspection of a circular elongated element (3), preferably using an apparatus (10) according to any one of claims 1 to 9, comprising the following steps:

- drawing a circular elongated element (3) along the rotation axis (4) of the circular elongated element (3),
- illuminating the circular elongated element (3) while the circular elongated element (3) is drawn along the rotation axis (4) of the circular elongated element (3), and
- acquiring a first image with a first camera (51) and a second image with a second camera (52) while the circular elongated element (3) is illuminated,
wherein the centerline of the first camera (511) and the centerline of the second camera (521) hit the lateral surface of a cylinder (7) defined by the circular elongated element (3),
wherein the cylinder (7) has a height h of 10 cm or less.

**11.** Method, preferably according to claim 10 and/or preferably using an apparatus (10) according to any one of claims 1 to 9, comprising the following steps:

- detecting, quantifying, and classifying defects in a circular elongated element (3), preferably with an apparatus (10) according to any one of the preceding claims;
- separating the circular elongated element (3) after detection, quantification, and classification of the defects to obtain a separated circular elongated element (3); and
- sorting out separated circular elongated elements (3a):

i) exhibiting a specific amount of defects or a specific size of (a) defect(s); and/or
ii) exhibiting a specific depth and/or specific class of (a) defect(s) and/or a feature set defined by measurable form or texture features from image processing; and/or
iii) recognized by the control unit as to exhibit a changed orientation during the inspection.

**12.** Bundle of separated circular elongated elements (3b);
comprising 5 or more separated circular elongated elements (3a);
wherein all separated circular elongated elements (3a) exhibits no open and/or closed air bubble having a length of 2000 μm or more, and/or
wherein all separated circular elongated elements (3a) exhibits no open and/or closed air bubble having a width of 100 μm or more;
preferably wherein the properties of the air bubbles are obtainable by an apparatus according to any one of claims 1 to 9 and/or a method according to claim 10 or 11.

**13.** Bundle (3b) according to claim 12,
preferably being inspected by an apparatus (10) according to any one of claims 1 to 9 and/or a method according to claim 10 or 11; and/or
wherein all separated circular elongated elements exhibits no open and/or, preferably and, closed air bubble having a length of 1000 μm or more, more preferably 500 μm or more, more preferably 250 μm or more, more preferably 100 µm or more, most preferably 50 µm or more, more preferably 30 µm or more.

14. Bundle (3b) according to claim 12 or 13,
preferably being inspected by an apparatus (10) according to any one of claims 1 to 9 and/or a method according to claim 10 or 11; and/or
wherein all separated circular elongated elements exhibits no open and/or, preferably and, closed air bubble having a width 50 µm or more, preferably 30 µm or more, more preferably 10 µm or more, more preferably 5 µm or more, more preferably 3 µm or more.

15. Use of a separated circular elongated element (3a) being obtainable by an apparatus (10) according to any one of claims 1 to 9, a method according to claim 10 or 11, and/or a bundle (3b) according to any one of claims 11 to 14 for the production of a pharmaceutical packaging or a technical glass.

Fig. 1

Fig. 2

Fig. 3

Fig. 4

Fig. 5a

Fig. 5b

Fig. 6a

| 1001 |
| 1002 |
| 1003 |

Fig. 6b.

| 1001 |
| 1002 |
| 1003 |

Fig. 6c

| 1001 |
| 1002 |
| 1003 |

Europäisches
Patentamt

European
Patent Office

Office européen
des brevets

## EUROPEAN SEARCH REPORT

Application Number

EP 20 19 5758

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2012/046136 A1 (UNIV PISA [IT]; ZANDA MICHELE [IT]; PRETE COSIMO ANTONIO [IT]) 12 April 2012 (2012-04-12)<br>* the whole document * | 1-5,7, 10,11,15<br><br>12-14 | INV.<br>G01N21/958 |
| X<br><br>A | CN 106 018 437 A (FOUR STARS GLASS TUBE CO LTD) 12 October 2016 (2016-10-12)<br>* the whole document * | 1,6, 8-10,15<br>12-14 | |
| A,P | Wikipedia: "Glass tube",<br>,<br>16 February 2021 (2021-02-16), XP055776798,<br>Retrieved from the Internet:<br>URL:https://en.wikipedia.org/wiki/Glass_tube<br>[retrieved on 2021-02-16]<br>* the whole document * | 1,10,11, 15 | |
| X,P<br><br><br><br><br><br>A,P | Wikipedia: "Syringe",<br>,<br>16 February 2021 (2021-02-16), XP055776800,<br>Retrieved from the Internet:<br>URL:https://en.wikipedia.org/wiki/Syringe<br>[retrieved on 2021-02-16]<br>* page 3 * | 12-14<br><br><br><br><br><br>1,10,11, 15 | **TECHNICAL FIELDS SEARCHED (IPC)**<br><br>G01N |

The present search report has been drawn up for all claims

| Place of search | Date of completion of the search | Examiner |
|---|---|---|
| Berlin | 23 February 2021 | Prasse, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 5758

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2021

| Patent document cited in search report | Publication date | Patent family member(s) | Publication date |
|---|---|---|---|
| WO 2012046136 A1 | 12-04-2012 | EP 2627995 A1<br>IT 1402103 B1<br>WO 2012046136 A1 | 21-08-2013<br>28-08-2013<br>12-04-2012 |
| CN 106018437 A | 12-10-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011113670 A1
- DE 102016114190 A1